# EUROPEAN PATENT SPECIFICATION

(11) **EP 0 757 621 B1**
(45) Date of publication and mention of the grant of the patent: **21.11.2001**
(21) Application number: 95917693.4
(22) Date of filing: 25.04.1995
(51) Int. Cl.: B29C 67/00, G06T 17/00

(54) **ENHANCED BUILDING TECHNIQUES IN STEREOLITHOGRAPHY**
FORTSCHRITTLICHE BAUTECHNIKEN IN STEREOLITHOGRAFIE
TECHNIQUES DE CONSTRUCTION AMELIOREES PAR STEREOLITHOGRAPHIE

(30) Priority: 25.04.1994 US 233027; 25.04.1994 US 233026
(43) Date of publication of application: 12.02.1997
(60) Divisional application: 01201196.1
(73) Proprietor: 3D SYSTEMS, INC., Valencia, California 91355 (US)
(72) Inventor: GIGL, John, J., Elburn, IL 60119 (US); PANG, Thomas, H., Castaic, CA 91384 (US); SMALLEY, Dennis, R., Newhall, CA 91321 (US); ALLEN, Kerry, J., Lancaster, CA 93535 (US); VORGITCH, Thomas, J., Simi Valley, CA 93063 (US); MANNERS, Chris, R., Moorpark, CA 93021 (US); EARL, Jocelyn, M., Old Headington , Oxford OX 9 1DL (GB); BEDAL, Bryan, J., L., Saugus, CA 91350 (US); JACOBS, Paul, F., La Cresenta, CA 91214 (US); NGUYEN, Hop, D., Quartz Hill, CA 93536 (US); LEYDEN, Richard, N., Topanga, CA 90290 (US); HULL, Charles, W., Santa Clarita, CA 91351 (US); VANDORIN, Stacie, L., Saugus, CA 91350 (US)
(74) Representative: Bluff, John William
(86) International application number: US9505148
(87) International publication number: WO9529053

(56) References cited:
- EP-A- 0 277 832
- EP-A- 0 425 177
- EP-A- 0 459 635
- EP-A- 0 590 957
- WO-A-91/12120
- WO-A-92/08200
- US-A- 5 121 333
- US-A- 5 182 715
- US-A- 5 278 949
- US-A- 5 282 143

## Description

This invention relates a method of and an apparatus for providing a three-dimensional object to be built layer-by-layer by selective solidification of a solidifiable medium, e.g. through application of the principles of stereolithography.

Several building techniques have recently become available for building three-dimensional objects in layers. One such technique is stereolithography, which is described in U.S. Patent No. 4,575,330 (hereinafter the '330 patent). According to the principles of stereolithography, a three-dimensional object is formed layer-by-layer in a stepwise fashion out of a material capable of physical transformation upon exposure to synergistic stimulation (e.g., fluid or fluid-like material such as a photopolymer, sinterable powder, or a bindable powder). In one embodiment of stereolithography, layers of liquid photopolymer are successively formed at the working surface of a volume of the liquid photopolymer contained in a container.

Typically, the working surface is the upper surface of the liquid, wherein the surface is a free surface as its position is not restrained by a physical barrier.

These layers are then selectively exposed to the synergistic stimulation to form successive object cross-sections. Moreover, upon transformation into the object cross-sections, the transformed material typically adheres to the previously-formed cross-sections through the natural adhesive properties of the photopolymer upon solidification. Additional details about stereolithography are available in the following publications and patents:

| | |
|---|---|
| PCT Pub. WO 92/20505 | PCT Pub. WO 90/15674 |
| PCT Pub. WO 92/08200 | PCT Pub. WO 91/06378 |
| PCT Pub. WO 89/10256 | JP Pat. App. 291647/1990 |
| PCT Pub. WO 89/10249 | U.S. Pat. 5,059,359 |
| PCT Pub. WO 89/10254 | U.S. Pat. 4,996,010 |
| PCT Pub. WO 89/10259 | U.S. Pat. 4,999,143 |
| PCT Pub. WO 89/11085 | U.S. Pat 5,015,424 |
| PCT Pub. WO 89/10801 | U.S. Pat 5,058,988 |
| EPO Pub. 85/171069 | U.S. Pat. 5,123,734 |
| JP Pub. 62-3596 | U.S. Pat. 5,059,021 |
| PCT Pub. WO 90/03255 | U.S. Pat 5,184,307 |
| U.S. Pat 5,104,592 | U.S. Pat. 5,174,931 |
| U.S. Pat. 5,143,663 | U.S. Pat. 5,096,530 |
| U.S. Pat 5,182,056 | U.S. Pat. 5,141,680 |
| U.S. Pat. 5,130,064 | U.S. Pat 5,192,469 |
| U.S. Pat. 5,321,622 | U.S. Pat. 5,238,639 |
| U.S. Pat. 5,182,715 | U.S. Pat. 5,256,340 |
| U.S. Pat. 5,234,636 | U.S. Pat. 5,182,055 |

As described in PCT Publication No. WO 89/10256, a stereolithography system will typically form a three-dimensional object in accordance with a corresponding object representation, which representation may be formed in a CAD system or the like. Before such a representation can be used however, it must be sliced into a plurality of layer representations. The stereolithography system will then, in the course of building up the object in a stepwise layer-by-layer buildup, selectively expose the untransformed layers of material in accordance with the layer representation to form the object layers, and thus, the object itself.

PCT Pub. WO 92/20505 describes various techniques for building an object through stereolithography with reduced post-cure distortion.

U.S. Patent 5,321, 622, (and PCT Pub. WO 92/08200) describe the use of Boolean operations in determining which portions of each layer continue from the previous layer through the present layer and through the next successive layer and which portions are up-facing or down-facing or both. Therefore, this referenced patent describes methods and apparatus for comparing initial data associated with each layer, and comparing such data between layers to form resulting data that will be used in the process of physically reproducing the object. Additionally, this referenced patent describes the use of such operations to yield appropriately sized objects (e.g. undersized or oversized).

U.S. Patent No. 5,130,064, PCT Pub. WO 91/06378, and PCT Pub. WO 92/20505 describe continuous skinning and weaving techniques for reducing post-cure distortion. U.S. Patent No. 5,184,307 describes in great detail the presently preferred stereolithographic apparatus, as well as various methods to form parts therewith. Two reference manuals, The SLA-250 User Reference Manual and The SLA-500 Reference Manual accompanied U.S. Patent Application Serial Number 429,435 (now U.S. Patent No. 5,130,064) as Appendices B and C respectively.

U.S. Patent 4,575,330 to Hull discusses stereolithography in general. It teaches complete polymerization of each cross-section in the formation of a stereolithographically-formed object. The basic stereolithography steps and apparatus components are described in the '330 patent.

U.S. Patent No. 5,076,974 describes off-absorption-peak wavelength post curing of parts which were formed based on the primary approach to building stereolithographic parts.

U.S. Patent No. 5,104,592 describes several methods of reducing curl distortion.

U.S. Patent No. 4,999,143 describes the use of web supports to support and minimize curl in a part being formed.

U.S. Patent No. 5,015,424 describes the use of "smalleys" to minimize curl.

U.S. Patent No. 5,182,056 describes the use of multiple penetration depths in the stereolithographic process, along with the use of beam profile characteristics in combination with resin parameters to predict various cure parameters associated with the creation of stereolithographic parts. This application also describes the role of beam profile information in the creation of skin fill and discusses various multiple wavelength curing methods for reducing part distortion.

U.S. Patent No. 5,234,636 discloses various methods of finishing a stereolithographic part surface to smooth out discontinuities in a post-processing step.

PCT Publication No. WO 90/03255 discloses the use of a doctor blade for obtaining a uniform coating of resin of known thickness over each cross-section of a stereolithographic part as well as a system for maintaining a known surface level of the building material as the part is being built.

A problem with prior systems relates to parts intended for use in investment casting applications. With traditional stereolithographic methods, problems have been experienced draining unsolidified material from the internal recesses of such parts. Another problem has been the collapsing of outer walls of such parts after the unsolidified material has been drained.

It is a feature of the subject invention to provide an object formed with a build style that promotes the draining of unsolidified building material from therein, but which has strong outerwalls. Such an object is useful for investment casting applications.

The invention provides a method for placing vents and drains in a three-dimensional object representation such that unsolidified material is able to drain from the object after it is built through stereolithography.

EP-A-0590957 addresses the problem of forming a honeycomb-like structure within an object whilst allowing communication for the flow of unsolidified material between cells of the structure through liquid ejecting ports. These ports are formed by eliminating or offsetting some of the ribs, or forming holes in some of the ribs.

EP-A-0250121 relates to the formation of three-dimensional objects, and discloses the formation of a drainage conduit and an air conduit. These conduits are formed to a region which was never intended to form part of the object, in particular to a trapped void surrounded by the object. An area not forming part of the object is determined by finding a voxel having a value of 0. Then, the value of voxels overlying and underlying this voxel are changed to 0 so these voxels form a conduit.

According to a first aspect of the present invention, a method of providing a three-dimensional object to be built layer-by-layer by selective solidification of a solidifiable medium is disclosed, in which at least one region of the object, which is indicated as being solid in a first data set defining the object, is built according to a second data set derived from the first data set as a structure having spaces containing unsolidified medium between solidified structural elements, said second data set provides that said object is built to have one or more surfaces defining the said region which close off said spaces from communication with the exterior of the object, in which at least one of said surfaces is provided with a vent or drain hole allowing evacuation of unsolidified material from said spaces.

According to a second aspect of the present invention, an apparatus for providing a three-dimensional object to be built layer-by-layer by selective solidification of a solidifiable medium is provided, in which at least one region of the object, which is indicated as being solid in a first data set defining the object, is built according to a second data set derived from the first data set as a structure having spaces containing unsolidified medium between solidified structural elements, the apparatus including a second data set generating means to generate said second data set including one or more surfaces defining the said region which close off said spaces from communication with the exterior of the object in which at least one of said surfaces is provided with a vent or drain hole allowing evacuation of unsolidified material from said spaces.

Particular embodiments of the invention are the subject of the respective dependent claims.

The present invention preferably utilizes a combination of two .CTL representations of the object which are scaled relative to each other with the normal orientations of the triangles reversed on the relatively scaled down representation.

Methods to form an object utilizing different building parameters in two or more shell-like zones and method to obtain the data necessary for such building are disclosed. For example, the object may be divided into an exterior zone of specified thickness and an interior zone. These methods utilize a combination of three or more object representations scaled relative to each other, with the normal orientations of the triangles of some representations reversed, and with pairs of consecutive representations utilized to define distinct zones.

This invention provides that objects are formed with a build style that promotes the draining of untransformed building material from the internal portion of it. The objects produced according to these techniques have particular usefulness as investment casting patterns. The ability of the untransformed building material to be removed from the internal portions of the object is a result of using wide spaced hatch patterns that are periodically offset and/or using at least some hatching patterns that result in broken lines of transformed material. Multiple skins and/or multiple boundaries may also be used. Furthermore, more complex embodiments are possible that use different building parameters for different internal portions of the object Some of these more complex embodiments use minimal internal grid structure near the surfaces and boundaries of the object and use more internal grid structure deep within the object. Other embodiments use some grid structure near the surfaces and boundaries of the object but use less or no grid structure in the deep internal regions of the object.

The invention may be used in combination with curl reduction techniques as described in: U.S. Patent No. 5,104,592; U.S. Patent No. 5,015,424; U.S. Patent No, 4,999,143, and the other patents and publications cited previously. For example, an improved stereolithographic method may comprise the combined use of hatch with nonconsecutive skin fill in more than the up- and down-facing features. As another example, an improved stereolithographic method may comprise the method of reducing exposure where vectors intersect and providing discontinuities in skin fill to avoid multiple vector exposure in regions where hatch vectors have been provided.

An example according to the present invention will be described with reference to the accompanying drawings, in which:
Figures 1a to 1f depict top views of two horizontal regions "A" and "B" which are operated on by Boolean union, intersection, and differencing operations;
Figure 2 depicts a top view of a square cross-section on which multiple line width compensations have been performed to create secondary boundaries;
Figure 3 depicts a top view of a square cross-section on which an offset line has made secondary boundaries;
Figure 4 depicts a partial side view of an object with multiple skins, wide boundary regions, and a gap in the solidified region near the surface;

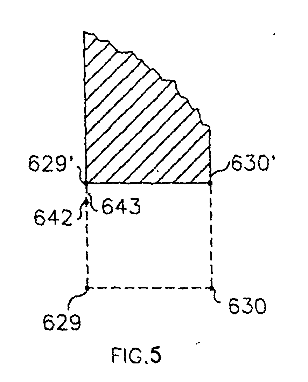

Figure 5 illustrates various problems that can occur in connection with Z-error correction;
Figures 6a and 6b illustrate a flowchart of a method for performing Z-error correction including the preliminary step of converting the .STL file to a .CTL file;
Figure 7 illustrates two triangles referred to in the text to explain the process of forming a .CTL file;
Figure 8 is an illustration of a curved surface discussed in the text in relation to the manipulation of near-flat surfaces to correct for Z-error;
Figures 9a-9b illustrate a flowchart of a preferred method of converting an .STL file to a .CTL file (using a hash table);
Figures 10a-10b, and 11a-11b illustrate the collapse of multiple triangle vertices into a single point, and the formation of degenerate triangles, when a .CTL file is formed using an artificially high rounding error;
Figure 12 illustrates a fragment of code used to eliminate degenerate triangles;

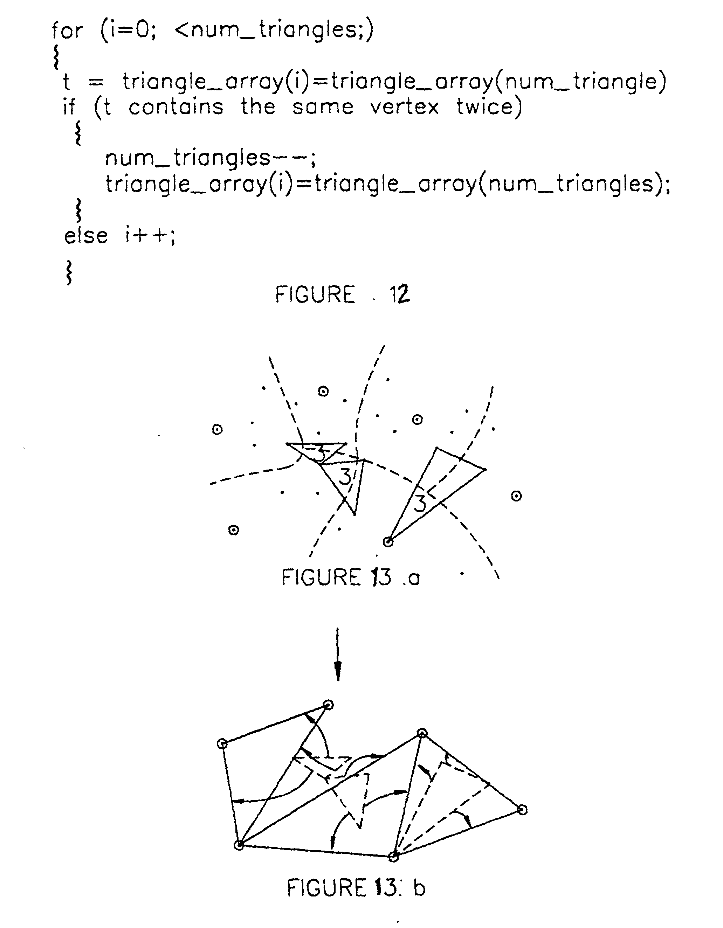

Figure 13a-13b illustrate the expansion of non-degenerate triangles to fill the void left by the removal of degenerate triangles;
Figure 14 illustrates a flow chart of a process for manipulating a .CTL file in order to produce a hollow shell of the object;
Figure 15 illustrates the process of processing a vertex normal as a weighted average of associated triangle normals, where the weights are based on the angles of the relevant triangle vertices;

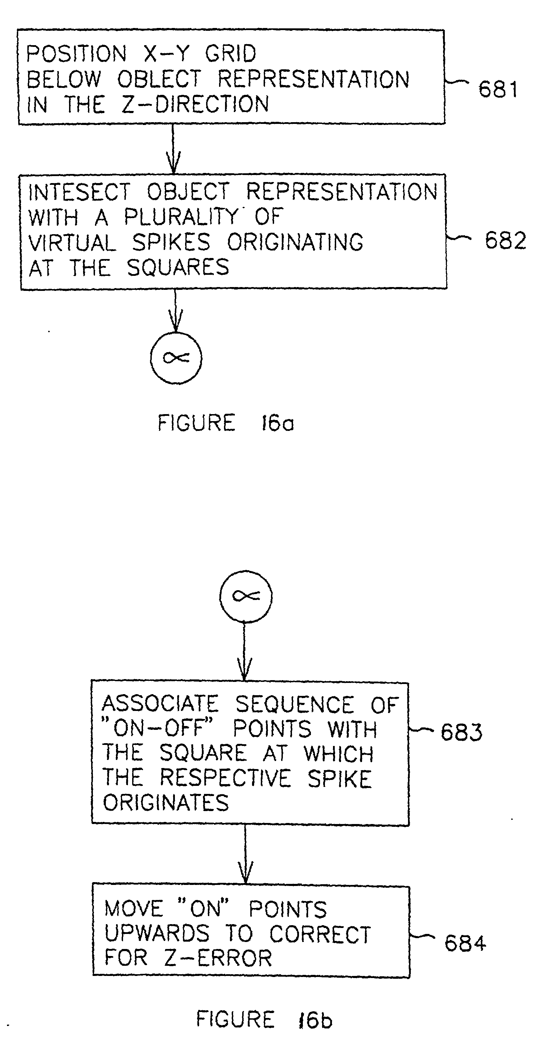

Figures 16a-16b illustrate a flowchart of a method for forming the 3D-RLE object representation;
Figures 17a and 17b depict two cross-section of an object wherein each cross-section uses a different hatching pattern;
Figures 17c and 17d depict vertical cuts through the object of FIGURES 7a and 7b at the two locations indicated;
Figure 18 depicts a cross-section divided into two regions with each region being hatched with a different pattern;
Figure 19 depicts a flowchart of the process of inserting a vent into a part through VIEW;
Figure 20 depicts a flowchart of the process of inserting a drain into a part through VIEW;
Figure 21 illustrates the "Vents and Drains" window of VIEW;
Figure 22-24 and 26 illustrates various perspective views of an object into which has been inserted vents and drains;
Figure 25 illustrates the "Viewing Transformation" window of VIEW;
Figure 27 illustrates the use of a Boolean operation to insert a vent/drain in a flat region;
Figure 28 illustrates the case in which the vent/drain extends beyond a flat region;
Figures 29-30 illustrate a first approach for inserting a vent/drain in a near-flat region;
Figures 31a-31c illustrate a second approach for inserting a vent/drain in a near-flat region;
Figures 32a-32b illustrate a problem that can occur with this approach in relation to steep near-flat regions;
Figure 33 illustrates the creation of unwanted hatch/fill that occurs when portions of layer boundaries are eliminated; and
Figures 34a-34b illustrate the use of a plurality of lines spaced in the z-direction to represent a vent/drain on a near-flat or vertical surface.

In implementing an example of the present invention, layer comparisons are required to determine with which final cross-sections each portion of each initial cross-section will be associated and each portion's appropriate cure depth.

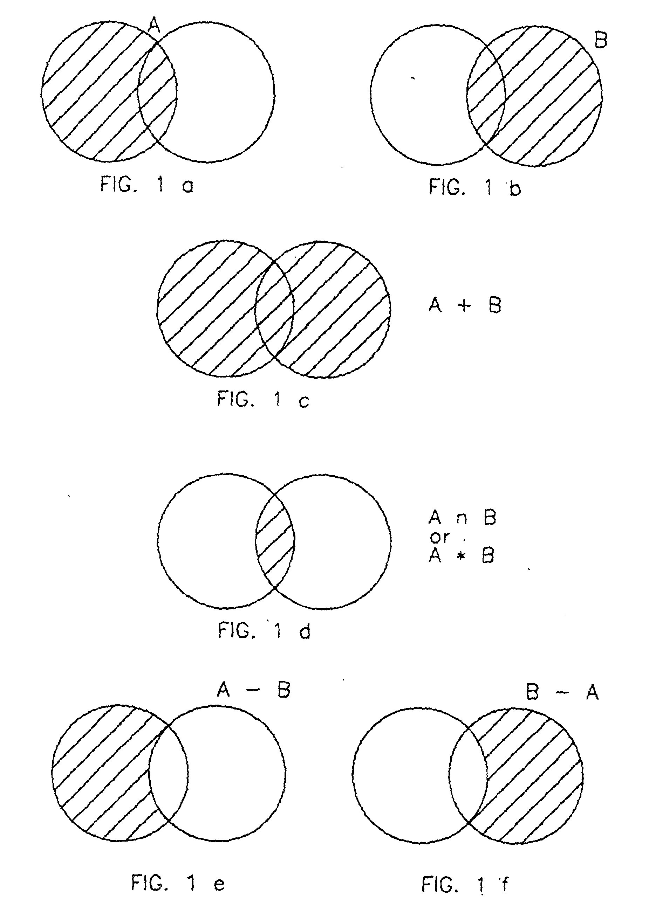

Layer Comparison Slice (CSlice) as described in U.S. Patent No. 5,321,622 already does generic layer comparisons in the form of Boolean unions (+), differences (-), and intersections ("n" or "*"). Figure 1 graphically depicts these Boolean operations. The shaded portion within the circle of Figure 1A depicts a first region known as region A. The other circle represents the physical placement of a second region, known as region B, relative to region A. In an analogous manner the shaded portion within the circle of Figure 1B depicts region B, while the other circle represents region A. The shaded portion of Figure 1C represents the result of the Boolean union of regions "A" and "B" (A+B). The shaded portion of Figure 1D represents the Boolean intersection of regions "A" and "B" (A ∩ B, or alternatively A * B). The shaded portion of Figures 1E and 1F, respectively, depict the result of the Boolean differencing operation of A minus B and B minus A. CSlice also uses the NOT operator (-). This operator is equivalent to a differencing operator. Thus the NOT operator reverses whatever it operates on. The above Boolean operations have been found to be useful in the CSlice program, of course other Boolean operations can be used as needed.

### Horizontal Comparison Techniques

In the practice of stereolithography, object cross-sections have been differentiated into various regions, relating to how portions of each cross-section interact with the external surfaces of the object. Using the slicing techniques described in U.S. Patent No. 5,184,307 (the '307 patent), each cross-section was potentially divided into five regions while with the techniques described in U.S. Patent No. 5,321,622 (the '622 patent), each cross-section was divided into potentially three regions. Whether from the teachings of the '307 patent or the '622 patent, these separated regions were derived based on whether or not each portion of a cross-section was an up-facing surface, a down-facing surface, or neither an up-facing nor down-facing surface of the object. Though the cross-sectional divisions as taught in these referenced applications are very useful, other divisions can be used, either in addition to those above or in replacement of some or all of them. These alternative or additional divisions can lead to significant advantages in the practice of stereolithography. Erosion, expansion and other offsetting techniques may be used to divide a cross-section into different regions based on the separation of individual portions of the cross-section from one or more points, one or more lines, or one or more surfaces.

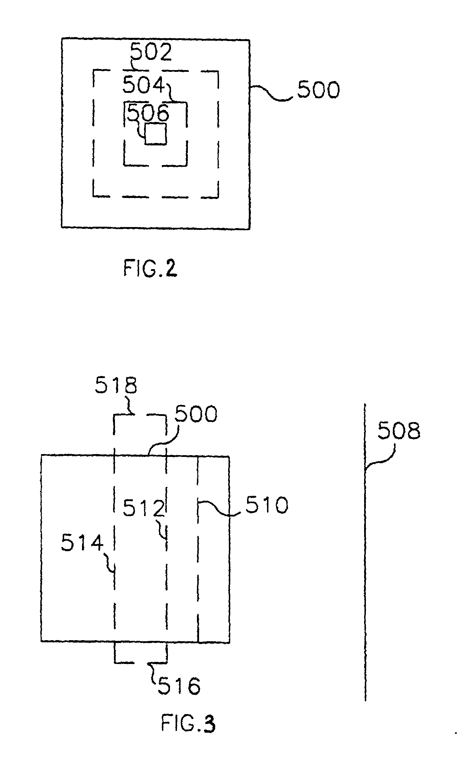

The preferred implementation of the horizontal comparison technique, is to offset selected points, lines or surfaces known amounts and utilize the offset elements to define new cross-sectional regions. In particular, a preferred embodiment utilizes positive and negative line width compensation type offsets of existing cross-sectional boundaries. Techniques for performing line width compensation are described in detail in U.S. Patent Nos. 5,321,622 and 5,184,307, both previously referenced. Figure 2 depicts a simple square cross-section of an object having a boundary 500 as well as first, second, and third offset secondary boundaries, labeled 502, 504 and 506, respectively. These secondary boundaries were created using a line width compensation technique. Offset boundary 506 may have been created directly from boundary 500 or alternatively may have been created from boundary 504 which may have been created from boundary 502 which in turn was created from boundary 500. Depending on the purpose to be achieved, any one or all of the offset boundaries could be used to define separate exposure regions for the object. For example the interior of 506 might be one exposure region, the region between 502 and 506 might be a second exposure region and the region between 502 and 500 might be a third exposure region. Furthermore, the boundaries on which the above offsets are made may be the overall cross-sectional boundaries for a cross-section or alternatively one or more of the down-facing, up-facing or continuing boundaries of the cross-section, either taken in combination or alone.

A preferred embodiment utilizing this technique involves making improved patterns for investment casting. In this embodiment, the horizontal comparisons operate on the Layer Boundary (LB) regions of each cross-section to divide them into three regions. The first region is that closest to the original LB boundaries and is approximately 15 - 30 mils (0.4 to 0.8 mm) wide. This first region forms a completely solidified shell region. The solidification of the first region may occur via multiple overlapping offset boundaries (preferred technique) or alternatively it may be filled by a utilization of skin vectors. The second region borders the first region and proceeds deeper into the cross-section another 50 to 100 mils (1.3 to 2.5 mm). This region is solidified using minimal structure, e.g. a very wide spaced hatch, or possible a broken hatch pattern, that may be used on only periodic layers. Each hatch line might be solidified via a single hatch vector or by two or more hatch vectors which are offset from one another. For example, it might be used once every 35 to 150 mils (0.9 to 3.8 mm) and be offset with consecutive uses. Alternatively, for example, it might be used every 100 to 150 mils (2.5 to 3.8 mm) but when used it may be exposed on a series of two or three, or more, consecutive layers without offset. The spacing between the vectors might be 100 to 250 mils (2.5 to 6.4 mm).

In this embodiment, the third region occupies the rest of the original LB region. The third region is solidified with a tighter hatch pattern, or one with fewer breaks, than that used in the second region. For example, hatch with a spacing of 100 to 150 mils (2.5 to 3.8 mm) might be used on every layer and offset periodically. This embodiment offers a strong outer shell which is directly supported by a very fine grid structure, which in turn is supported by a more rigid grid structure. As drainage of stereolithographically produced investment casting patterns is critical to their successful use, and as resin entrapment between the surfaces of the object and the hatch lines can result in failure of the ceramic mold on bum out, the utilization of the horizontal comparison technique allows implementation of an internal grid structure that is fine enough near the object surfaces to allow resin drainage but structurally rigid enough in the deep interior portions of the object to provide adequate support for large structures so as to ensure structural integrity. Without the horizontal comparison techniques described herein, this embodiment could not readily be implemented on an automated basis.

Furthermore, in a more preferred embodiment these horizontal comparison techniques will be combined with Simultaneous Multi Layer Comparison (SMLC) techniques such as disclosed in WO 92/08200, US 5,321,622 and US 5,192,469 in order to produce a pattern with multiple skins as well as with thicker boundary regions. The combination embodiment is readily implemented by deriving the multiple skins first by utilization of the SMLC techniques and then using the Horizontal comparison technique to further dissect the Final Layer Boundary FLB regions resulting from the layer comparisons.

The most preferred embodiment extends the last embodiment one step further, by continuing the layer comparison into one or more layers immediately above the multiple down-facing skins and immediately below the multiple up-facing skins so as to provide region designations that allow the regions immediately above and below the down-facing and up-facing surfaces, respectively, to be transformed using a minimal amount of hatch. Preferably, these regions extend beyond the skins by 25 to 150 mils (0.6 to 3.8 mm) and most preferable by 70 to 100 mils (1.8 to 2.5 mm) and are solidified using a series of point exposures, e.g. columns, which may be one, two, three or more linewidths in diameter and spaced from each other by 25 to 150 mils (0.6 to 3.8 mm). Alternatively, the columns may not be circular in cross-sectional dimension but may take on some other shape, such as small crosses, boxes or the like.

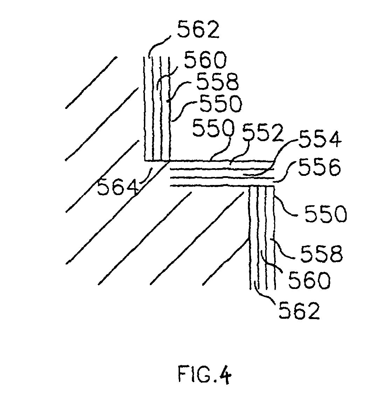

Other more advanced embodiments are possible where the most exterior portions of the FLB regions are not given a widened solid cure where the FLB is bounded by a region which is being skinned. More particularly, it is possible to judge the skin width which bounds a portion of the FLB, and thus based on this width to determine how the region within and near the FLB should be cured. Of course the wider the adjacent skin the less need for a wide outer solidified FLB zone. In fact, in the presence of a wide skin, a wide outer solidified FLB zone could be detrimental. In an extension of this embodiment, additional care can be taken to ensure that object regions close to inside comers, are not inadvertently unexposed due to the potential lack of multiple skins being copied into these corner regions and lack of an FLB zone that is not bounded by an adjacent region being skinned. Figure 4 depicts such a region 564. Figure 4 depicts a side view of a portion of an object, wherein lines 550 define the outer surface of the object, region 552 indicates an up-facing skin, and regions 558 depict the boundaries of continuing regions (FLB). Regions being skinned due to the use of multiple skins are indicated by numerals 552 and 554, while regions being transformed due to the widened solidification zone around the FLBs (e.g. by use of multiple boundaries) are indicated by reference numerals 560 and 562. As can be seen, region 564 should be solidified but is not. This is due to blanket decision not to utilize widened cure zones around the FLB that are adjacent to skinned regions. The extra care involves utilization of additional comparisons to determine whether or not corresponding FLBs exist on the next consecutive layer and whether or not they are adjacent to skin regions. If such a next consecutive layer is found then the corresponding FLBs for the present layer, and probably one or more previous layers, are supplied with the widened solidification zone. Other horizontal comparison techniques are also possible. For example, regions on a cross-section can be designated by their distance from a line which lies parallel to the plane of the cross-section and which either intersects the cross-section or is outside it. This situation is illustrated in Figure 3. A cross-section is depicted which is defined by boundary 500. A line 508 is depicted outside the cross-section. In a manner analogous to offsetting boundary vectors during a line width compensation routine, line 508 is offset from its original position by known amounts. At desired intervals, the offset line can be used to create secondary boundary lines for the cross-section. These secondary boundary lines can be used to define regions of the object which are located at particular distances from the original line 508. Numerals 510, 512 and 514 depict such secondary boundary lines. If it is desired to define actual boundary loops based on the secondary lines, the region between two secondary boundary lines can considered an imaginary solid which is partially defined by the secondary boundary lines. To complete the definition of this imaginary solid region, two additional line segments are attached to the secondary boundaries wherein the attachment is made on either side of the regions which contain the actual cross-section. Two such lines are depicted in the Figure with numerals 516 and 518. The fully defined imaginary solid region can be intersected with the cross-sectional region defined by boundary 500 so as to yield the region common to both. This common region is located at a given distance from the original line 508. This type of comparison can find utility in a variety of situations. For example, if the line 508 represents an axis around which the completed object is going to be rotated then the moment of inertia from each cross-sectional strip can be used to determine the overall moment of inertia for the object. Appropriate cure parameters can be applied to each strip so as to give the object an overall moment of inertia or to give the strips at similar distances from the line 508 the same cure parameters.

As another example of a horizontal comparison technique, a point like region, either within the cross-section or outside the cross-section, can be defined from which a series of negative compensations (expansions) will be performed in order to determine the distance between each portion of the cross-section and the initial point. The initial point may be defined as a small square, hexagon, octagon, or other polygon which will give the appropriate geometric shape with each expansion.

As an example, the horizontal comparison techniques can be utilized to help automate the recoating process. If positive multiple line width compensations, i.e. reductions, are made, wherein each compensation step has a known width, wherein the number of steps are counted, and wherein the compensations are repeated until the entire cross-section has been traversed, one can determine the maximum distance from the outer portions of the cross-section to its deepest internal point. This distance determines the maximum distance resin must travel over the surface of the previous cross-section in order to reach the most distance point on the cross-section. This distance is the diameter of what is known as the critical circle. One can correlate the critical circle diameter to the dip depth required to most rapidly form a preliminary coating over the previous cross-section. This in turn can lead to a reduction in build time as the net dipping times can be reduced. Thus before performing the recoating process for each cross-section a look up table or the like can be consulted to determine the appropriate dipping parameters to use during recoating.

The recoating process can be further automated by utilizing a combination of the horizontal and vertical comparison techniques to characterize the object configuration over which a smoothing member is passed. Though, many potential object configurations can exist, the characterization of these configurations can hopefully be reduced to a tolerable set. The set of different configurations may be divided into two or more categories. Preferably, the set of distinct configuration will have less than 10 to 20 categories. For each predefined category, the optimum recoating parameters can be determined and stored for use during the recoating process for each layer. There are various recoating parameters that can be varied depending on the object configuration. For example, these parameters may include: (1) the number of sweeps, (2) the clearance between the smoothing member and object surface during each sweep, (3) the velocity of each sweep, (4) the gap between the bottom of the smoothing member and the desired building level, (5) the sweeping direction, etc.

In a modified apparatus another recoating parameter which may be varied might include the type of device utilized, e.g. a flexible blade or a rigid blade, a rotating device, a blade with teeth or multiple appendages, etc. Another recoating parameter which might be varied is the orientation of the object relative to the sweeping device, e.g. the object may be formed on a platform that can be rotated in the horizontal plane. The rotatable platform that can be turned to an appropriate direction for sweeping then rotated back for during of the next layer or alternatively solidification of the next layer can occur by rotating the orientation of the exposure pattern to be utilized, followed by another rotation of the object for recoating purposes when appropriate and possibly additional rotations and offsets of the exposure pattern.

A number of variables may be utilized in categorizing the object configuration. For example, these variables may include: (1) layer thickness, (2) maximum depth of the widest trapped volume, (2) the maximum width of the deepest trapped volume, (3) the cross-sectional area of the previously solidified layer, (4) the primary orientation and dimensions of the largest trapped volume, and (5) the primary orientation and dimensions of the previously solidified layer. The use of a smoothing member in the stereolithographic recoating process, e.g. a doctor blade, is described in PCT Pub. WO 90/03255, which is incorporated herein by reference as if set forth in full.

A number of preferred parameter values have been given for the various embodiments described herein. However, further parameter values can be derived by one of skill in the art based on the teachings herein and the building of sample objects.

Even though the embodiments of this disclosure have been directed toward obtaining cure parameters through data processing, this only represents one approach to causing appropriate transformation of material in association with each layer. Therefore, the data processing terminology should be interpreted to include any means for modifying original object descriptive parameters that result in the transformation of material according to the teaching of this invention. The teachings of this invention relate to interpreting object descriptive parameters and reproducing the object in a manner which deviates from a strict layer by layer formation, as necessary to achieve a higher accuracy reproduction. The methods and apparatus of this invention lead to higher accuracy reproductions by utilization of the simultaneous multiple layer curing techniques disclosed herein.

### QUICKCAST Building Techniques

"QUICKCAST" is any of a number of different building styles which allow untransformed material to be removed from the interior of the walls of the object after formation (previous embodiments are described in PCT Pub. WO 92/08200 and PCT Pub. WO 92/20505). The ability of the untransformed building material to be removed from the internal portions of the object is a result of using wide spaced hatch patterns that are periodically offset and/or using at least some hatching patterns that result in broken lines of transformed material, for example as described previously. Multiple skins and/or multiple boundaries may also be used. The drained objects are typically used as investment casting patterns. Since these build styles produce objects with little distortion and since they also use relatively small amounts of building material, they are considered practical building styles for many applications.

The building technique which produces drainable parts for use as investment casting patterns has become known as a QUICKCAST Build Style. This is a generic name that can be applied to any of a variety of stereolithographic build styles that can be used in forming objects with hollow or drainable walls.

Presently preferred QUICKCAST building techniques use widely spaced cross-hatch vectors that are derived from hatch paths that are a fixed for a number of layers. This causes the hatch lines that are produced from the hatch vectors to overlay each other for a number of layers. After forming several layers, the hatch paths are shifted and remain in this altered state for a number of layers after which they are shifted back to their original locations. In effect, the shifting of hatch lines only occurs periodically. The most appropriate hatch spacing and hatch height before shifting are resin dependent. It has also been found that these parameters can also be dependent on object configuration. When casting the stereolithographically formed patterns, it has been found that if the thickness of completely solid material exceeds 80 to 120 mils (2.0 to 3.0 mm) the ceramic mold shells may crack when attempting to burnout the stereolithography pattern. Thus, when forming objects, it must be ensured that regions thicker than 80 to 120 mils (2.0 to 3.0 mm) do not contain trapped resin that could become solidified upon post cure irradiation. This in effect presents an upper limit on how many consecutive layers can contain overlapping hatch if the pattern is to be used for arbitrary object configuration. If the layers of overlapping hatch approach the 80 mil (2.0 mm) level, it is apparent that an arbitrary object configuration might contain regions which could become prohibited from draining, On the other hand, if the layers of overlapping hatch become too thin, the vertical openings between the offset hatch lines may become too small to allow effective drainage of the liquid resin due to surface tension or viscous flow effects. Balancing the problems involved in setting the overall hatch height, for typical object configuration the preferred thickness of layers before offset is in the range of 70 to 130 mils (1.8 to 3.3 mm) and more specifically between 80 to 120 mils (2.0 to 3.0 mm) most preferably about 100 mils (2.5 mm) plus or minus 5 mils (0.1 mm) and maybe 10 mils (0.2 mm). For a given object configuration, it may be advantageous to reduce the height before offset to as low as 30 or 40 mils (0.8 to 1.0 mm). However when lowering the height before offset, one must expect significant increases in drainage time. It is noted that when curing hatch vectors, they are typically supplied an exposure in excess of the layer thickness to ensure that the layers adhere to one another. This excess cure depth is typically 5 to 6 mils (0.1 mm) or more. This excess cure depth results in a decrease vertical dimension of the openings formed by the offsetting of hatch. This decrease in opening height must be considered when determining the number of layers to draw before offsetting. The horizontal spacing of the hatch vectors is also bounded by opposing requirements. If the hatch spacing is made too small, the surface tension and/or viscous flow characteristics of the liquid might make drainage impractical, if not impossible. On the other hand if the spacing of the hatch vectors is too wide, several problems could occur: (1) they might supply inadequate support for the skin and boundary regions surfacing the object, (2) they might provide inadequate strength for overall object integrity, or (3) they might create trapped volumes that could make recoating difficult. For typical object configurations, it has been found that a spacing of approximately 120 to 180 mils (2.0 to 3.0 mm) is preferred; more specifically a spacing of 130 to 170 mils (1.8 to 3.3 mm) is preferred; and most preferably a spacing of approximately 150 mils (3.8 mm) is used. However, spacing of 100 to 250 mils (2.5 to 6.4 mm) have also been found to be satisfactory. The presently preferred building materials for stereolithographically forming investment casting patterns are hybrid epoxy resins, SL 5170 and SL 5180. These resins are manufactured by Ciba Geigy of Basel Switzerland and sold by 3D Systems, Inc. of Valencia, California. The SL 5170 is used in combination with a HeCd laser emitting 325 nm radiation, while SL 5180 is used in combination with an argon-ion laser emitting 351 nm radiation or a krypton laser emitting 351 and 356 nm radiation. The preferred layer thickness for SL 5170 is 4 mils (0.1 mm) with a boundary vector overcure of 7 mils (0.2 mm), and other exposure parameters including a hatch vector overcure of 5 mils (0.1 mm) in combination with a triangular hatch pattern, a skin vector spacing of 4 mils (0.1 mm) and a net skin cure depth of 12 mils (0.3 mm), The preferred layer thickness for the SL 5180 resin is 6 mils (0.2 mm) with a triangular pattern and other exposure parameters including a boundary overcure of 7 mils (0.2 mm), a hatch overcure of 6 mils (0.2 mm), and with other parameters similar to those used for the SL 5170 resin.

Though it is possible to heat the part to an elevated temperature to lower the resin viscosity to expedite drainage, it has been found that the most preferred temperatures are equivalent to the temperatures used in forming the objects on the SLA. This temperature range is typically 28 to 30 degrees C. If the temperature is increased significantly above this level increase in object distortion due to temperature has been found to out weight any advantage gained by decreased drainage time.

Though the above described version of the QUICKCAST build style works well for making useable investment casting pattems, it has several drawbacks. These drawbacks include: (1) holes can be form in the skins and surfaces of the object due to support removal and/or due to inadequate adhesion between boundaries possibly due to a dewetting phenomena between the solidified resin and the liquid resin when very thin layers are used in forming the object, (2) as noted above, internal cavities can be closed off so as to trap resin, (3) insufficient drainage from portions of the objects, (4) inadequate surface finish, (5) possible formation of trapped volumes, and (6) surface dimples. Based on these problems a new version of the QUICKCAST build style has been developed. This new version adds one or a combination of new features. These new features may include: (1) formation of multiple down-facing skins so as to increase the structural integrity of down-facing features, (2) no utilization of hatch vectors when forming at least the first layer of down-facing skin which minimizes any wafflish appearance of these features, (3) formation of multiple up-facing skins to increase the structural integrity of the up-facing features, (4) no utilization of hatch vectors when forming at least the last layer of up-facing skin thereby minimizing any wafflish appearance that might result, (5) utilization of multiple boundaries which are offset from one another when forming the exterior portions of each cross-section thereby increasing the structural integrity of the walls of the object, (6) exposing the most exterior boundary last on each cross-section, (7) utilization of wider spaced hatch vectors than possible with the previous version, thereby decreasing drainage time and decreasing the likely hood of trapping pockets of resin in tight regions, (9) utilization of different hatching styles than those preferred for the previous version, eg., rectangular or hexagonal patterns,(10) automatic creation of holes in selected surfaces of the object so as to eliminate or reduce the formation of trapped volumes and so as to allow automatic drainage of liquid from the object upon completion of object formation and lifting of the object from the vat of resin; (11) compensation for use of down-facing skins with a thickness greater than the layer thickness. In the most preferred embodiment all of these elements would be combined; however, it is conceivable that only a portion of these elements might be implemented in a particular embodiment wherein most if not all of the benefit of the preferred embodiment would be achieved for a given object configuration. In the currently preferred embodiment, the most preferred parameters when using SL 5170 are: (1) use of 6 mil (0.15 mm) layers; (2) use of 4 boundaries spaced apart by 4 mils (0.10 mm) per consecutive boundary; (3) use of 3 up-facing and down-facing skins exposed using both X- and Y-fill vectors with each set of fill vector supplied with sufficient exposure to yield an 8 mil (0.20 mm) cure depth with no hatch on the first down-facing layer or the last up-facing layer, (4) use of a hatch spacing of between 150 and 350 mils (3.8 to 8.9 mm) and more preferably between 200 and 300 mils (5.1 and 7.6 mm) and most preferably approximately 250 mils (6.4 mm); (5) use of a square hatch pattern, though eventually a hexagonal pattern might be better, (6) though not yet automated, at least one hole of an approximately ¼-inch (6 mm) diameter at or near the top of the object, to act as a vent, and one, two or more holes of approximately ¼-inch (6 mm)diameter each at or near the bottom of the object to act as drainage zones. The values specified for these parameters can be varied, for example, depending on the actual layer thickness to be used in forming an object two skins may be sufficient or more than 3 may be desired.

An additional embodiment of the QUICKCAST build style exists that doesn't necessarily use offset hatch to ensure drainability of the objects being formed. Instead, in this embodiment the hatch vectors are not drawn as continuous lines but are periodically provided with gaps that are sufficiently large in both the horizontal and vertical dimensions so as to allow flow of the liquid resin and its eventual drainage from the interior portions of the walls of the object. As with the previous embodiments the spacing of the hatch vectors is preferably equal to or greater than 150 mils (3.8 mm). It was noted above with regard to the previous embodiments, that if thin, vertical-features were in existence on a given object then depending on the exact vertical dimensions of the features, the exact vertical location of the features, and the vertical locations at which the hatch vectors are being offset; it is possible that liquid resin could get trapped between external boundaries, external skins, and the hatch lines. This is especially a problem with the multiple skin embodiment since the use of these extra skins decreases the vertical dimensions of the open regions of these features, thereby increasing both the likelihood of trapping liquid and of having the overall solidified region exceeding the acceptable thickness. On the other hand these previous embodiments have little likelihood of absolutely trapping liquid in small horizontal features as long as the vertical dimensions of these features were not also small. In the previously described offset hatch embodiments, without implementing an object feature sensitive embodiment, it is difficult to reduce the probability of encountering these vertical traps. However, in the instant broken hatch embodiment it is possible to reduce the probability of forming these vertical traps at the cost of increasing the probability of encountering horizontal traps. However, if done carefully, with this embodiment, both the vertical and horizontal trapping situations can be maintained within levels that are not likely to cause the overall solidified thickness to exceed the acceptable level. If an object has only small horizontal features as opposed to vertical features, one of the previous embodiments is probably well suited for building the object. If the object has both small vertical features and small horizontal features the first example implementation of this embodiment is well suited for forming the object. However, if the object has only small vertical features, then the second example implementation of this embodiment is well suited for forming the object since it leads to higher structural integrity but still allows liquid to be readily drained from the object.

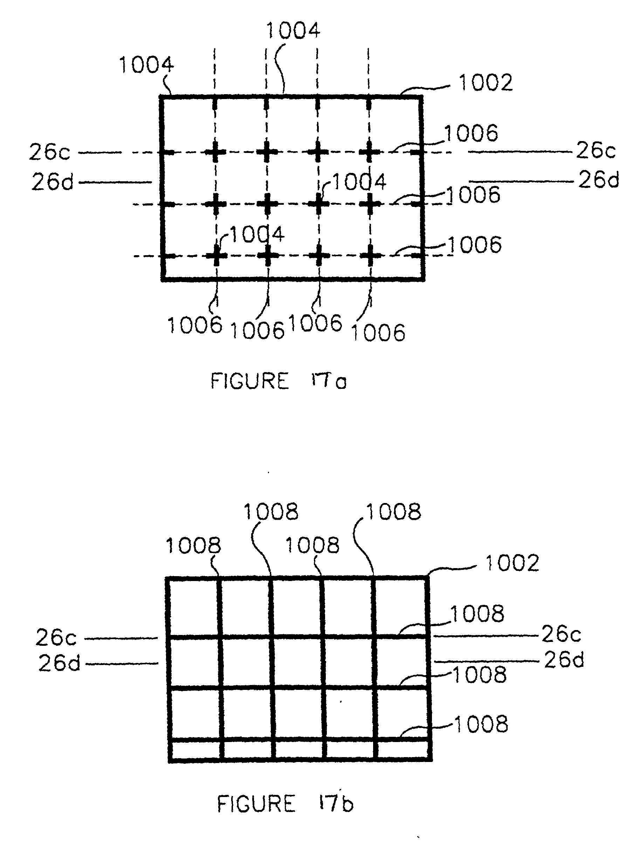

As a first example implementation of a broken hatch embodiment, reference is made to Figure 17a, 17b, 17c, and 17d. Figure 17a depicts the boundary 1002 for an arbitrary layer and the hatch pattern 1004 to be cured in association with that layer. As can be seen the hatch lines to be cured on this layer lie on a square grid of hatch paths 1006 (i.e., the dash lines) but only the regions near the intersections of the paths are actually solidified. If the spacing between the consecutive hatch paths is, for example, 150 mils (3.8 mm), the length of the individual lines solidified on each path may be between 30 and 50 mils (0.8 and 1.3 mm). This results in open horizontal regions of 100 to 120 mils (2.5 to 3.0 mm) between each solidified line on each path. Figure 17b on the other hand depicts a hatch pattern 1008 to be cured in association other layers of the object. This hatch pattern is based on the same grid 1006 of hatch paths that the short hatch 1004 was based on. Thus it is ensured that the hatch lines lie a top one another. In this embodiment the hatch patterns 1004 and 1008 alternate on a periodic basis. This alternation of the patterns should occur so that the object is formed with sufficient structural integrity. At the same time the alternations should be performed using a spacing such that the vertical dimensions of the openings are sufficiently large to allow efficient flow of the liquid material, while at the same time not spaced so far apart so as to form structures that will trap liquid in features thinner than 80 to 120 mils (2.0 to 3.0 mm). Based on this criteria, the 1004 hatch pattern is used on consecutive layers until a height of 80 to 120 mils (2.0 to 3.0 mm) is obtained followed by use of the 1008 hatch pattern on the next consecutive layers for a height of 20 to 40 mils (0.5 to 1.0 mm). This layer-to-layer build up process is depicted in the object side view as shown in Figures 17c and 17d which are taken from vertical cuts through a plane of stacked hatch paths and a plane intermediate to the stacked hatch paths. As can be readily observed, this embodiment is less susceptible to trapping volumes of liquid that can result in solidified regions thicker than the acceptable level. Of course other hatch patterns are possible which can lead to the same desired result. These other hatching patterns might be based on other hatch path patterns or spacings and/or other combinations of solid and broken hatch, or even of broken and broken hatch. For added structural strength, each hatch line may actually be formed by exposing two more slightly off-set hatch vectors.

Another embodiment may not allow the hatch lines on layers containing broken hatch lines to contact the boundaries of the region. In fact a minimum separation distance between can be implemented by creating a temporary boundary for hatching purposes via a line width type of compensation of the original boundary.

The second embodiment is similar to the first embodiment above, except that some of the broken hatch lines are allowed to extend further and thus provide more stability to the structure.

An additional QUICKCAST building style embodiments exist that can be used in combination with the any of the above embodiments. Some of these additional embodiments involve the use of different hatching patterns at different positions within the object depending on how far the positions are from the surface of the object. When using a single skin and single boundary offset hatch embodiment, the hatch must be relatively closely spaced and offset frequently to ensure that the surfaces of the object are adequately supported and that large regions of liquid won't be trapped within the object However, closely spaced hatch and frequently offset hatch implies that the flow paths are relatively small and thus considerable time may be required to complete the necessary drainage. Since the internal integrity of the object is less important than the external integrity, as one moves further from the surfaces of the object the spacing of the hatch vectors can be increased significantly. This increase in spacing of the vectors, or other reduction in the quantity of hatch lines being used, can lead to decreases in drainage time since the resistance to resin flow is reduced. The first step in implementing an embodiment that changes hatch line quantity as one moves deeper into an object, is to determine how deep one is into the object.

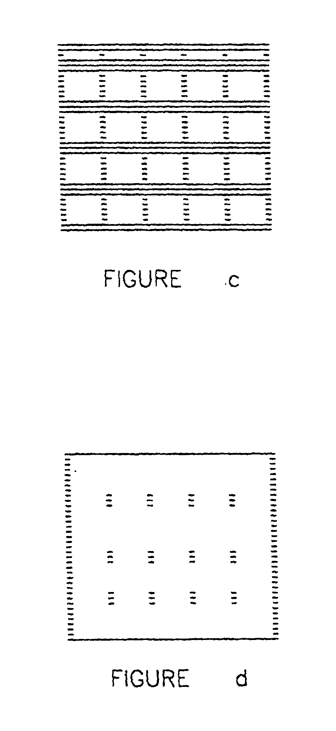

Through the use of layer comparisons to determine vertical depths into the object and the use of erosion and expansion routines to determine one horizontal depth into the part one can define boundaries for each cross-section that are located at some predefined minimum distance into the object from all surfaces and thus the curing of the material within these boundaries can be based on a modified set of criteria. In curing the regions within these boundaries the boundaries themselves need not be solidified thus removing any concerns about these deep boundaries limiting fluid flow. For example, if a particular hatch spacing is preferred for use near the surfaces of the object in order to support external boundaries and skins, that hatch spacing may be doubled in the deep regions of the object. For example the portions of the cross-section within 50-150 mils (1.3 to 3.8 mm) of the surface may be given a hatch spacing of approximately 150 mils (3.8 mm) while portions deeper into the cross-section may be given a hatch spacing of 300 mils (7.6 mm). Figure 18 depicts a cross-section which uses two different hatch types depending on the distance the region is from the surfaces of the cross-section.

In another embodiment, the use of the information about a region's depth into the object can be utilized in an opposite manner to that of the previous embodiment Especially when using a multiple skin and multiple boundary embodiment, one can use less internal structure to support the surfaces and external boundaries of the object. This use of less support structure can lead to much freer drainage of the untransformed material within and near the external surfaces of the object. However, though the surface areas are much more rigid one must still be concerned about overall structural integrity of the object. Based on these concerns this embodiment uses minimal internal structure near the surfaces and boundaries of the object and more structure when one is further from the external features of the object. For example, the hatch spacing may be large when one is within a particular distance to the surface of the object and/or one can ensure that only broken hatch vectors are used within the given distance of the surface. One can then convert to closer or non-broken hatch as one moves deeper into the interior of the object. Since it is only the combination of boundaries and/or skin with hatch that can create trapped pockets of liquid (which can eventually become solidified and lead to failure during casting) and since this embodiment can be used to ensure that no trapped regions having dimensions that come close to those which can result in casting failure during bum out, embodiments based on these techniques are considered to be most preferred. Of course intermediate embodiments exist that can focus only on horizontal distance from boundaries or on only vertical distance. Though, less preferred, these intermediate embodiments would probably produce satisfactory parts in many situations while simultaneously reducing the computational complexity of the embodiment.

As noted above, horizontal comparisons can be of particular advantage in implementing advanced QUICKCAST build styles. The following is an example of such as embodiment In this embodiment, the horizontal comparisons operate on the LB regions of each cross-section to divide them into three regions. The first region is that closest to the original LB boundaries and is approximately 15-30 mils (0.4 to 0.8 mm) wide. This first region forms a completely solidified shell region. The solidification of the first region may occur via multiple overlapping offset boundaries (preferred technique) or alternatively it may be filled by a utilization of skin vectors. The second region borders the first region and proceeds deeper into the cross-section another 50 to 100 mils (1.3 to 2.5 mm). This region is solidified using minimal structure, e.g. a very wide spaced hatch, or possibly a broken hatch pattern, that may be used on only periodic layers. Each hatch line might be solidified via a single hatch vector or by two or more hatch vectors which are offset from one another. For example, it might be used once every 25 to 150 mils (0.6 to 3.8 mm) and be offset with consecutive uses. Alternatively, for example, it might be used every 100 to 150 mils (2.5 to 3.8 mm) but when used it may be exposed on a series of two or three, or more, consecutive layers without offset. The spacing between the vectors might be 100 to 250 mils (2.5 to 6.4 mm).

In this embodiment, the third region occupies the rest of the original LB region. The third region is solidified with a tighter hatch pattern, or one with fewer breaks, than that used in the second region. For example, hatch with a spacing of 100 to 150 mils (2.5 to 3.8 mm) might be used on every layer and offset periodically. This embodiment offers a strong outer shell which is directly supported by a very fine grid structure, which in turn is supported by a more rigid grid structure. As drainage of stereolithographically produced investment casting patterns is critical to their successful use, and as resin entrapment between the surfaces of the object and the hatch lines can result in failure of the ceramic mold on burn out, the utilization of the horizontal comparison technique allows implementation of an internal grid structure that is fine enough near the object surfaces to allow resin drainage but structurally rigid enough in the deep interior portions of the object to provide adequate support for large structures so as to ensure structural integrity. Without the horizontal comparison techniques described earlier, this embodiment could not readily be implemented on an automated basis.

Furthermore, as noted previously, a more preferred embodiment will combine the horizontal comparison generated regions with multiple skins generated by vertical layer comparisons. This combination embodiment is readily generated by the techniques described in the above referenced application.

The most preferred embodiment extends the last embodiment one step further, by continuing the layer comparisons into one or more layer immediately above the multiple down-facing skins and immediately below the multiple up-facing skins so as to provide region designations that allow the regions immediately above and below the down-facing and up-facing surfaces, respectively, to be transformed using a minimal amount of hatch. Preferably, these regions extend beyond the skins by 25 to 150 mils (0.6 to 3.8 mm) and most preferably by 70 to 100 mils (1.8 to 2.5 mm) and are solidified using a series of point exposures, e.g. columns, which may be one, two, three or more line widths in diameter and spaced from each other by 25 to 150 mils (0.6 to 3.8 mm). Alternatively, the columns may not be circular in cross-sectional dimension but may take on some other shape, such as small crosses, boxes, or the like.

Other more advanced embodiments are possible where the most exterior portions of the continuation boundary regions are not given a widened solid cure where the continuation boundary is bounded by a region which is being skinned. In an extension of this embodiment, additional care can be taken to ensure that object regions close to inside corners, are not inadvertently unexposed due to the potential lack of multiple skins being copied into these corner regions and lack of widened continuation boundary zones.

### ACES Building Styles

A preferred embodiment, when using the SL 5170 resin and the SL 5180 resin is called ACES building styles. Only boundaries and X and Y skin fill are used on each portion of each cross-section. The sequence of exposing the X and Y vectors is alternated from layer to layer. The first set of skin vectors exposed are given an exposure that results in a net cure depth of slightly under one layer thickness. When the second set of vectors expose the material, the increase in cure depth results in adhesion. Typically, identical exposures are applied to both sets of skin vectors. However, it is possible to use a larger exposure on the second set than that used on the first set. The preferred layer thicknesses are 4 mils (0.10 mm) for SL 5170 and 6 mils (0.15 mm) for SL 5180. Though not preferred it is possible to utilize hatch vectors during exposure of the cross-sections, furthermore it is possible to use the ACES building style on a portion of a cross-section or object and some other building style on another portion of the cross-section or object. The ACES build style yields highly translucent parts.

When using epoxy resins like SL 5170 and SL 5180, it has been found helpful to allow a time period of between 5 and 90 seconds after exposure of each cross-section before beginning the recoating process so as to allow the modulus of the exposed resin to increase to a certain minimum level before subjecting the newly exposed layer to the forces involved in recoating. This time period is called the predip delay. For the ACES building style when using SL 5170 the time period is typically between 10 and 30 seconds whereas when using SL 5180 it is typically between 45 and 90 seconds. For, the QUICKCAST build styles when using SL 5170, the predip delay is typically between 0 and 15 seconds whereas when using SL 5180, it is typically 10 to 30 seconds. Exact values of predip delay can be obtained from minimal trial and error for particular part geometries.

As a technique for eliminating or at least minimizing the impact that predip delay has on part building time, it is possible to use a smart exposure pattern that exposes critical areas first, followed by exposure of less critical areas. In effect, the count down of the predip delay time can begin as soon as all critical regions have been exposed. Thus depending on how long the exposure of the less critical regions takes, the predip delay is either eliminated or at least reduced. Critical areas can be considered external boundary regions and external skin regions, with only a grid structure of the non-external regions being considered at least marginally critical. One potential work around involves scanning external regions first followed by scanning a gird pattern in the non-external regions, after which predip delay count down begins, followed by exposure of the remaining non-external regions. The predip delay work around which the ACES building styles can be implemented via nonconsecutive skinning techniques wherein the boundaries are exposed, followed by the first skin exposure, followed by the second skin exposure wherein critical regions are exposed first (which may be located in one or more distinct boundary regions) followed by a second, and possibly higher order interlaced exposure.

### Automatic Generation of Vents and Drains

The automatic generation of vents and drains will now be described. The technique involves utilization of the VIEW program, described in U.S. Patent No. 5,182,715 (the '715 patent). Through VIEW, a user is able to display and possibly reorient an object prior to building it in order to obtain smoother surfaces and the like.

As described in the '715 patent, VIEW is configured to display a representation of the object in the .STL format. The .STL format is a tesselated triangle format, in which the triangles substantially span the surface of the object, and each triangle is represented by its three vertices (in an exemplary embodiment, the three vertices are each represented by three floating point numbers, and are ordered in accordance with the "right-hand rule") and a normal vector (also represented in an exemplary embodiment by three floating point numbers representing the i, j, and k components of the normal). Additional details about the .STL format are available in U.S. Patent Nos. 5,059,359; 5,137,662; 5,321,622; and 5,345,391.

It is also possible to display an object representation conforming to the .CTL format. As discussed below, the .CTL format provides several advantages relative to the .STL format which are relevant to VIEW. The first is that it facilitates the execution of scaling and rotation operations. The second is that, through appropriate selection of the delta value (the level of acceptable rounding error), detail which is unnecessary from the standpoint of VIEW can be eliminated, enabling the resultant object to be efficiently displayed on relatively slow graphic display devices.

A first embodiment of an automatic method of adding vents and drains to an object involves displaying a representation of the object, whether in the .CTL or .STL format, and automatically displaying to a user the flat triangles involved in representing the object. Only the flat triangles are highlighted, since in this embodiment, a vent can only be placed in a flat up-facing triangle, while a drain can only be placed in a flat down-facing triangle. VIEW is able to determine which triangles are candidates for placement of a vent or drain through the normal vector associated with the triangle: the k component of the normal of all flat triangles is either 1 or -1, with the value of 1 being associated with up-facing triangles, and the value of -1 being associated with down-facing triangles.

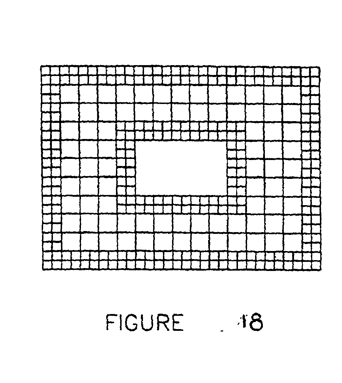

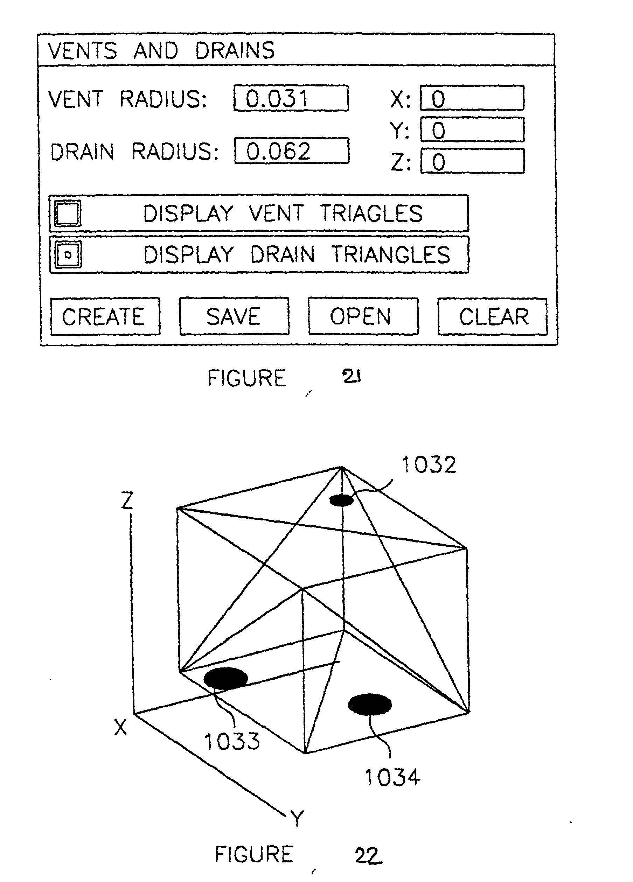

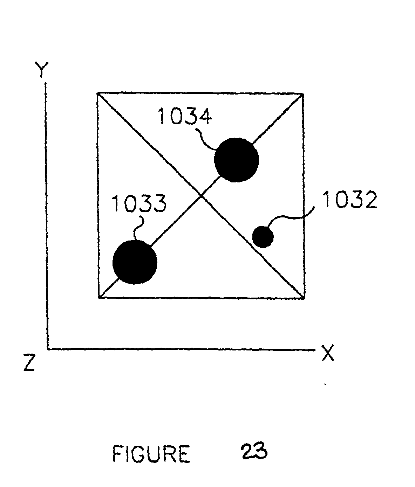

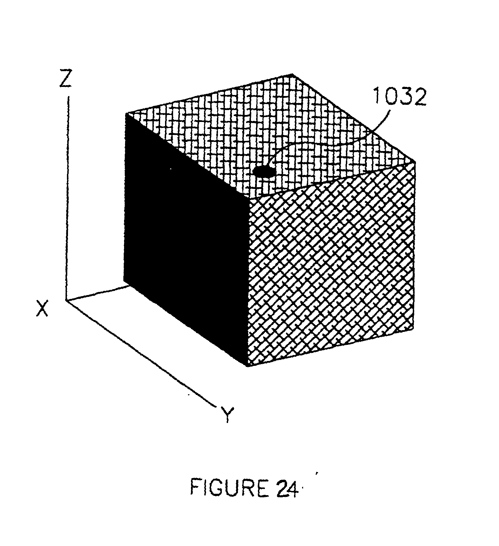

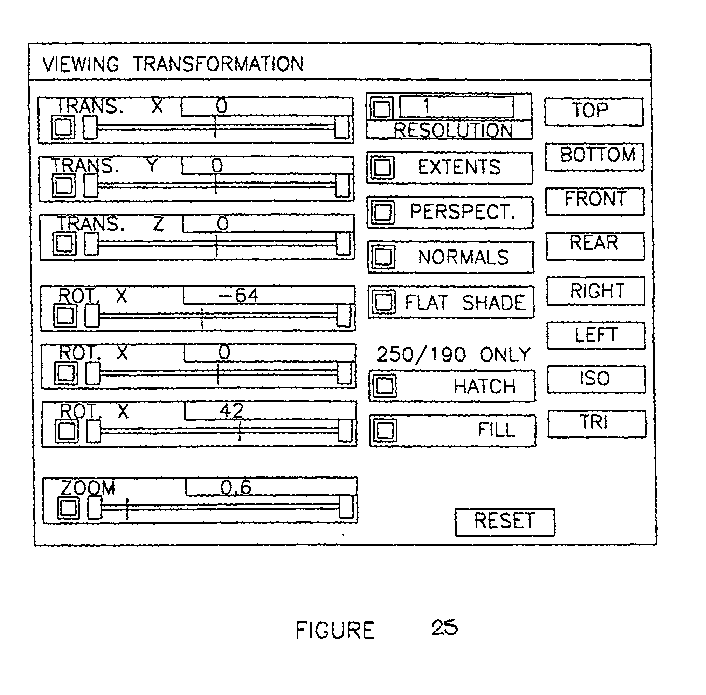

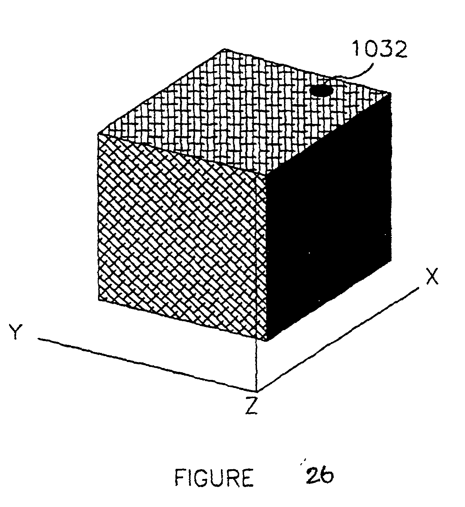

The process for creating vents involves the steps illustrated in Figure 19. In the first step, identified in the figure with numeral 1020, the user selects the option of displaying a top view of the part. Using a mouse, the user clicks onto the "Top" button using the "Viewing Transformation" window provided by VIEW, which is illustrated in Figure 25. The "Viewing Transformation" window provides a user with the capability to specify various characteristics about the display, such as whether to transpose or rotate it in one or more coordinates, whether to zoom it, the perspective of the display (i.e., top, bottom, front, rear, right, light, isomorphic, or tesselated triangle), and the shading of the display. Examples of a display of cube in which one or more of these parameters have been varied are illustrated in Figures 22, 23, 24, and 26.

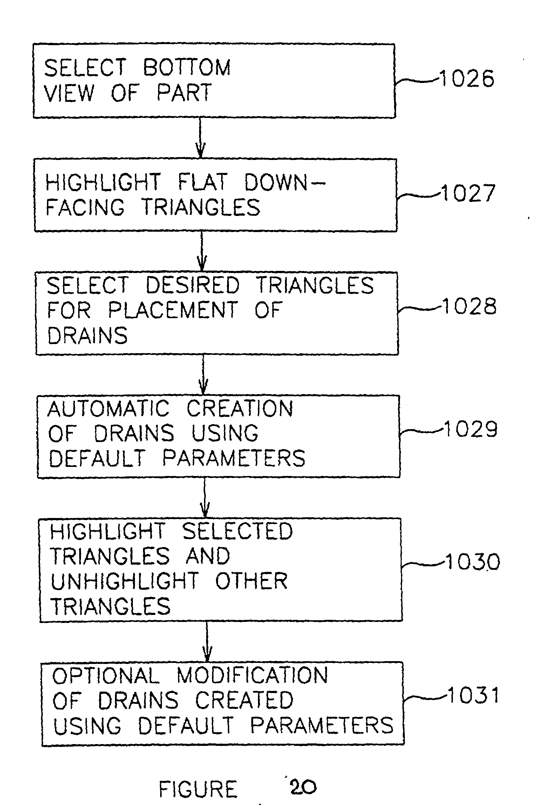

The next step, identified with numeral 1021 in Figure 19, is to highlight the candidate triangles in which a vent can be placed, which, as discussed, are the flat up-facing triangles. This step is accomplished by clicking on the "Display Vent Triangles" bar provided in the "Vents and Drains" window, both of which are illustrated in Figure 21. As a result of this step, the flat up-facing triangles are highlighted in the display with a particular color, e.g., blue.

The next step, identified with numeral 1022 in Figure 19, is to identify selected ones of the flat up-facing triangles in which vents are to be created. This is accomplished by moving the mouse arrow into any of the highlighted triangles, and pressing one of the mouse buttons. The selected triangle will then be highlighted in a different color, e.g., white, than the other up-facing triangles. In this step, more than one triangle can be selected.

The next step, identified with numeral 1023 in Figure 19, is the automatic creation of the vents. This is accomplished by clicking on the "Create" button displayed as part of the "Vents and Drains" window (illustrated in Figure 21). The result is that a vent is created in every one of the selected triangles using default values. Simultaneously, as depicted by the step identified with numeral 1024 in Figure 19, the vents, and the triangles in which they appear, are highlighted with an appropriate color, e.g., blue. All the other flat up-facing triangles are unhighlighted.

A vent which has been created in accordance with this process is illustrated in Figures 22 to 24 and 26 (the vent in all four figures is identified with numeral 1032). As discussed, the four figures represent different perspectives and shading of the top of the object.

Also as discussed, in this embodiment, the vents, when first created, have a default shape and size. Advantageously, the default shape of the vent is a circle, but it should be appreciated that other shapes are possible. Moreover, for the resins presently preferred for 3D Systems' commercial products (Cibatool SL 5170 for the SLA-190/250, and Cibatool SL 5180 for the SLA-500), it has been found that acceptable results can be achieved with a default vent radius of 1.250 mm (0.05 in.).

The final step illustrated in Figure 19 (the step identified with numeral 1025) allows a user to change the default size of the vents, and also allows the user to move a vent (in the X-Y plane) or eliminate certain of the vents created in step 1023. To modify or change the size of a vent requires the user first to select it. To select a vent, the user simply positions the mouse arrow over the vent, and clicks the mouse button. When selected, the vent will be highlighted using a particular color, e.g., white. The x,y,z coordinates of the vent, and the vent radius, will then be displayed in the appropriate data entry fields with the "Vents and Drains" window. By entering new values in the x and y fields (the z field cannot be altered in this embodiment), the user can change the location of the selected vent. To change the radius of one or more selected vents, the user need only change the "Vent Radius" field. When these new values are entered into the respective fields, the display is automatically updated to reflect the changes. By clicking on the "Clear" button, the user can deselect all selected vents.

The process of creating drains will now be described. The process is very similar to that of creating vents, with the major exceptions being that drains are typically larger than vents (since a drain, unlike a vent, must be large enough to allow unsolidified material to flow), and are created on flat down-facing triangles as opposed to flat up-facing triangles. Therefore, only the differences between this process and the previously-described process of creating vents will be described.

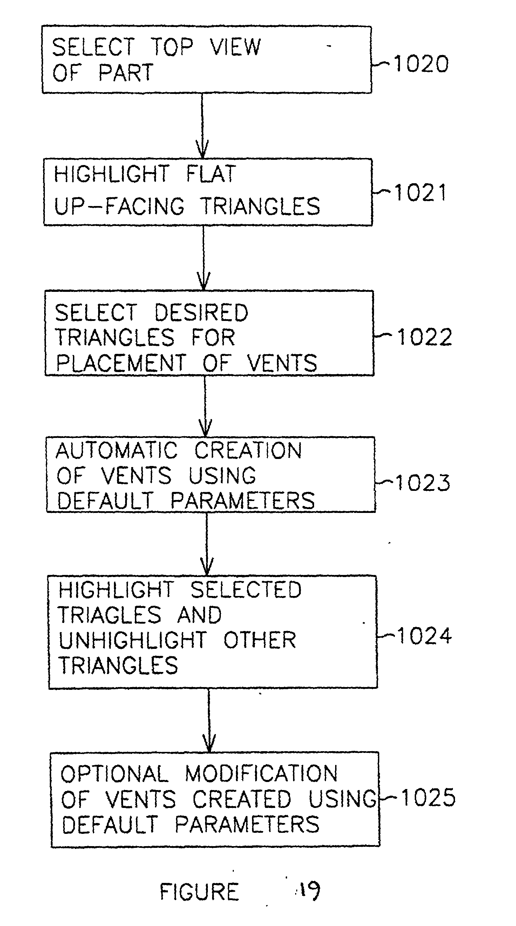

The process is illustrated in Figure 20. The first step, identified with numeral 1026, involves selecting a bottom view of the part using the "Vewing Transformation" window of Figure 25. Next, in the step identified with numeral 1027, the user selects the "Display Drain Triangles" button from the "Vents and Drains" window (Figure 21). In response, VIEW highlights the flat down-facing triangles using an appropriate color, i.e., yellow. In the third step, identified with numeral 1028, the user selects from the set of flat down-facing triangles, the desired triangles for the placement of drains. In response, VIEW highlights the selected triangles using an appropriate different color, i.e., white. In the next step, identified with numeral 1029, the user prompts VIEW to automatically create the drains by clicking on the "Create" button in the "Vents and Drains" window. VIEW does so by creating the drains in the selected triangles using default parameters. Presently, the default shape, position, and size of a drain is a circle centered in the middle of the triangle having a radius of 3.750 mm (0.150 in.) for both the Cibatool SL 5170 (preferred for use with the SLA 190/250) and SL 5180 (preferred for use with the SLA 500). Next, in the step identified with numeral 1030, VIEW highlights the triangles selected for placement of drains and the drains themselves with an appropriate color, i.e., yellow, and unhighlights the other flat down-facing triangles. Finally, in the step identified with numeral 1031, the user optionally repositions, changes the radius of, or deselects any of the drains using the "Vents and Drains" window. The result is one or more drains as depicted in Figures 43 and 44 (through identifying numerals 1033 and 1034).

At present, through appropriate commands, VIEW allows a user to change the default radius of the vents and drains and their positioning. It should be appreciated that the inclusion of additional commands are possible which provide for a default shape. It should also be appreciated that several other refinements and enhancements of this embodiment are possible, including, without limitation, the insertion of vents or drains on near-flat surfaces.

After drains and vents have been inserted into the object representation as described, VIEW allows a user to save the information descriptive of the drains and vents in a data file. At present, the information saved by VIEW consists, for each vent or drain, the x, y, z coordinates of the center point of vent or drain, the x, y, z components (I, j, k) of the triangle normal, and the radius of the vent or drain. To actually build an object with the vents or drains inserted, the user inputs this information into C-SLICE, i.e., the Boolean layer comparison SLICE program described in U.S. Patent No. 5,321,622 (the '622 patent), along with the unaltered object representation. From the object representation, C-SLICE produces up to three types of borders in relation to an object layer, up-facing boundaries (UB), layer boundaries (LB), and down-facing boundaries (DB). After producing this boundary information, C-SLICE manipulates it based on the information provided by VIEW. For a given drain or vent, C-SLICE determines which layer is required to be modified using the z-coordinate of the triangle in which the vent or drain appears (the singular term is used given that the triangles in this first embodiment are constrained to be flat triangles which, by definition, lie entirely within a given z-plane). The sign of the k-component of the triangle normal is then used to determine whether to modify the UB or DB information. If the sign is positive, indicative of a vent, the modification is made to the UB information; if negative, the modification is made to the DB information.

The modification made to this data will now be described. As discussed in the '622 patent, the UB and DB information created by C-SLICE is preferably in the form of a polylist, i.e., an ordered sequence of line segments which circumscribe a solid or hollow feature of the object. Advantageously, the order of the coordinates obeys the right-hand rule. In accordance with this rule, the segments are ordered in a counterclockwise direction if they define an exterior boundary of the object, i.e., circumscribe a solid portion of the object. Conversely, if they define an interior boundary of the object, i.e., circumscribe a hollow portion of the object, the segments will be ordered in a clockwise direction.

The technique involves describing the vent or drain with a polylist. In the present embodiment, a polylist of 255 segments is used, but it should be appreciated that other options are possible. Advantageously, the coordinates of the segments are ordered, in accordance with the right-hand rule, in a clockwise direction. That is because, by definition, they describe a hole. The sign of the k component of the triangle normal is then evaluated. If the sign is positive, the UB data is earmarked for modification; if the sign is negative, the DB data is earmarked for modification. A Boolean union operation, as is described in the '622 patent, is then performed between the appropriate data, whether UB or DB, and the polylist describing the hole or vent in question.

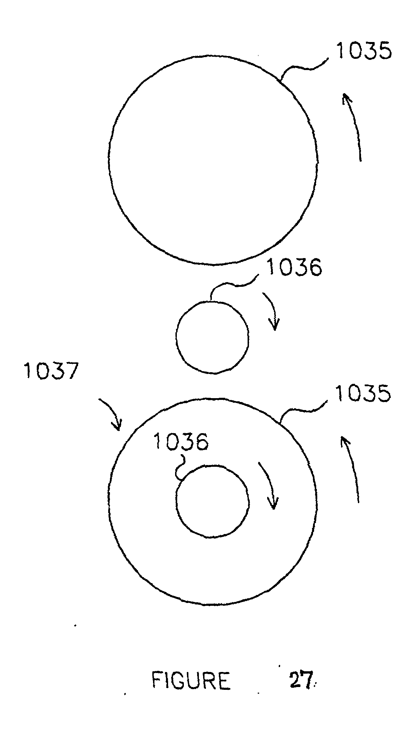

This step is illustrated in Figure 27. The circle identified with numeral 1035 depicts a polylist which is representative of a border (whether up-facing or down-facing) enclosing solid area. In accordance with the right-hand rule, the segments making up the polylist are ordered in a counter-clockwise direction. The circle identified with numeral 1036, on the other hand, depicts a polylist which represents a vent or drain. In accordance with the right-hand rule, the segments making up the polylist are ordered in a clockwise direction since a vent or drain by definition encloses a hollow region. The Boolean union of the two polylists is identified with numeral 1037.

An aspect of QUICKCAST, described earlier, is the creation of multiple layers of skinning of the object in order to create a strong shell for use in investment casting. The aforementioned step, in which the polylist making up a hole or vent is Boolean unioned with UB or DB data, must be repeated for each of these skinned layers. If it is only performed with less than all, the hole or vent will become skinned over, i.e., blocked, in the final part.

Once the appropriate UB or DB data has been modified, the C-SLICE process continues as is described in the '622 patent in combination with the inventive concepts described herein in relation to the QUICKCAST style of part building. The result is a part built according to the QUICKCAST style in which vents or drains have been inserted into the part.

It should be appreciated that this embodiment for automatic vent or drain creation can also be used to drain unsolidified material from trapped volumes within solid parts. As discussed in U.S. Patent No. 5,258,146, trapped volumes can lead to leading and trailing edge problems due to the buildup of material during the recoating process. The problem can be significant: the buildup of material, once solidified, can interfere with the operation of the doctor blade or sweeper used to recoat. The selection of appropriate recoating parameters to at least partly eliminate these problems, as discussed in the previously-referenced U.S. Patent No. 5,258,146, is not an entirely satisfactory solution because it prevents the selection of recoating parameters which are independent of the geometry of the particular part at hand. Automatic vent or drain generation would help eliminate trapped volumes. In this technique, the union operation is not only performed on down-facing or up-facing regions but on all regions (down-facing, up-facing and continuing) on all layers between the specified down-facing or up-facing feature and the opposite up-facing or down-facing feature inclusive.

It should also be appreciated that there is no requirement in the present embodiment that vents or drains fit within a single triangle, or even within a particular up-or down-facing region. If the vent or drain falls partially outside an up- or down-facing region the vent or drain will be reduced in size since part of it will be missing.

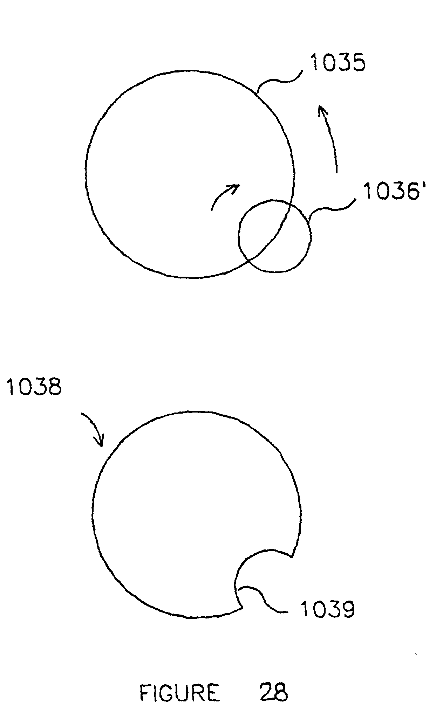

This phenomenon is illustrated in Figure 28. As shown, polylist 1035, representing either an up-facing or down-facing border, is Boolean unioned with polylist 1036' which, as shown, encircles a hole which is not entirely encompassed by the polylist 1035. The result of this union operation is the boundary depicted in Figure 28. Since this boundary defines the limits to which hatch or skin will be created on the layer in question, a vent or drain, identified with numeral 1039, will still be created in the final part, albeit with a reduced surface area in relation to the hole described by polylist 1036'.

Several refinements or enhancements of this embodiment will now be described. In one enhancement, the data provided by VIEW can be use din combination with an object representation formatted in accordance with the SLC format (a contour/layer format described in the '622 patent). Through Boolean union operations, such data can be modified using the vent/drain data provided by VIEW in the manner described.

A second embodiment for automatically inserting vents/drains in a three-dimensional object will now be described. In this embodiment, the capability is provided for introducing vents or drains in near-flat regions of the object, a capability which is especially useful in the case of parts which, through reorientation to eliminate trapped volumes, facilitate the creation of supports, and the like, have no flat regions.

A first approach to implementing this second embodiment involves introducing a flat region into the object representation at the originally near flat region, and then applying the just-discussed embodiment to insert a drain or vent in the just-created flat region. The technique involves using VIEW to display the object, selecting from library of predetermined representations a representation of a second object having a flat surface (such as a cylinder or rectangular bar), situating in VIEW the second object representation such that the flat area is appropriately situated within the near-flat region of the first object representation, and then performing a Boolean differencing operation between the two representations. The previously-discussed embodiment is then used to insert a vent or drain at the resultant flat area created in the first object representation.

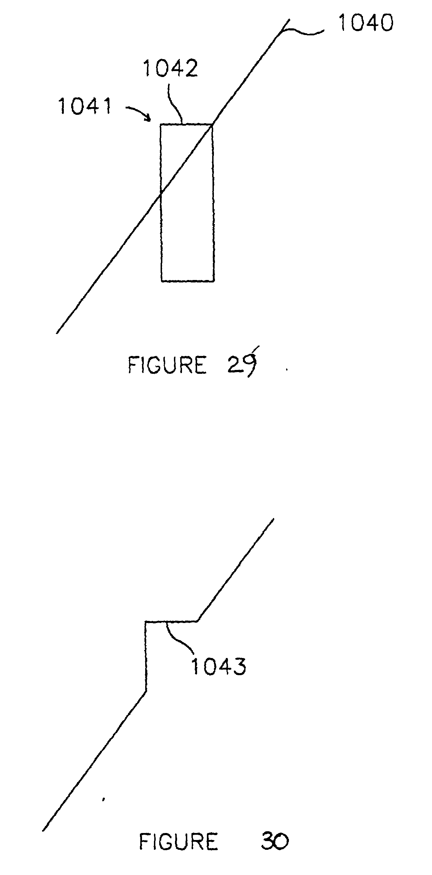

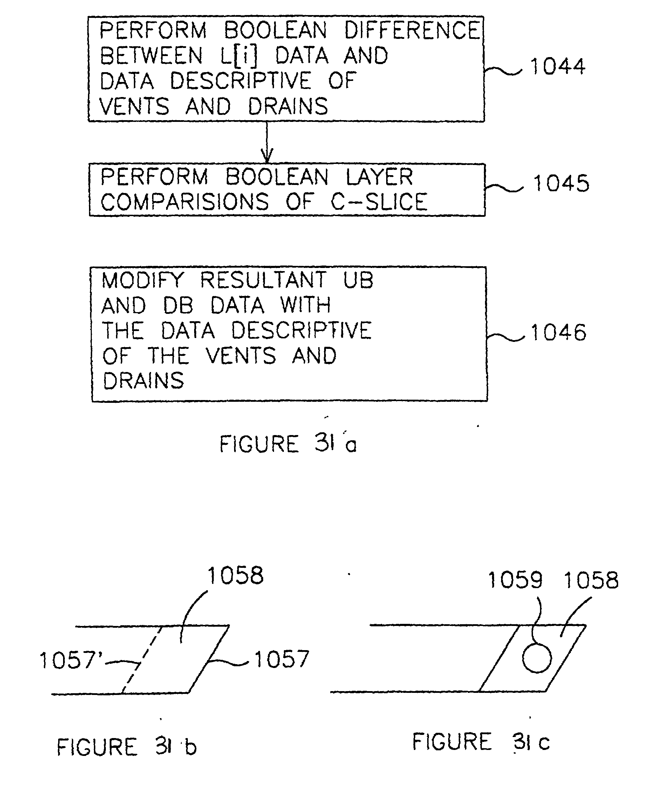

The technique is illustrated in Figures 29-30. In Figure 29 is shown a near flat area, identified in the figure with numeral 1040, and a representation of a cylinder, identified with numeral 1041, having a flat area 1042 which has been situated within the near flat area. The result of the Boolean differencing operation is shown in Figure 30. As shown, a flat region, identified with numeral 1043, is created within the part for insertion of vents or drains.

A variant of this technique involves performing this Boolean operation in the CAD system, i.e., modifying an .STL file representing the object.

A second approach to implementing this second embodiment involves a modification to C-SLICE, the Boolean layer comparison "slice" "program described in the '622 patent A flowchart of the technique is illustrated in Figure 31a. The first step, identified with numeral 1044, involves taking as input the preliminary boundary data described in the '622 patent (used as input to the Boolean layer comparison operations which results in the formation of the UB, LB, and DB data), i.e., the L[i] data, and performing a Boolean differencing between this data and data descriptive of desired vent and drain zones. The effect is to create a flat region for the insertion of a vent/drain. This step is illustrated in Figure 31 b. There is shown the preliminary boundary data for a layer, identified with numeral 1057, which is moved/retracted to position 1057, through this Boolean differencing operating. The effect is to create flat region 1058. In the second step, identified with numeral 1045, the modified L[i] data is processed through C-SLICE in the traditional way to arrive at UB, LB, and DB data reflecting the inclusion of the vent and drain zones. In the third step, identified with numeral 1046, the resultant UB and DB data is modified through a second pass with the data descriptive of the vents and drains in the manner described previously in relation to the first embodiment, i.e. creation of polylists descriptive of the vents/drains, followed a Boolean union between this data and the UB/DB data. This step is illustrated in Figure 31c. There is shown the inclusion of vent/drain 1059 in the flat region 1059 created in step 1044. This modified data is then used to form the part.

A potential problem with these approaches involves the possible formation of relatively large indentations in the object due to the need to create a large enough flat region in order to insert a drain or vent of acceptable size. In particular, as the slope of the slanted surface becomes steeper it is clear that the indentation becomes larger for a given size of the flat feature to be created. The indentations thus formed may represent an unacceptable distortion of the object surface. An additional potential problem with these approaches arises from the fact that the hole inserted is not located at the lowest extreme of the object feature into which it is inserted. If the hole is to act as a drain, it is apparent that not all of the internal liquid can be drained from the object unless the object is tilted. Of course, if an automatic object tiling feature is added to the platform support structure to which the object is attached, this becomes a non-issue.

These problems may be partially overcome by revising the embodiment so that the hole exists in the vertical surface created by the section of the object that is Boolean subtracted. Techniques for implementing vertical holes are described hereinafter.

A third approach to implementing this second embodiment simply involves removing the skins associated with a sloped surface and leaving the layer boundaries in place. In this case, the defined hole would have a slanted orientation wherein portions of the hole would be associated with successive layers. The partial hole associated with the successive layers or cross-sections of data can be obtained by projecting the portion of the slanted hole in between two cross-sections onto the appropriate of the two cross-sections (typically the upper portion of the layer or upper cross-section). Techniques for performing the projection operation are described in previously referenced U.S. Patents 5,345,391 and 5,321,622.

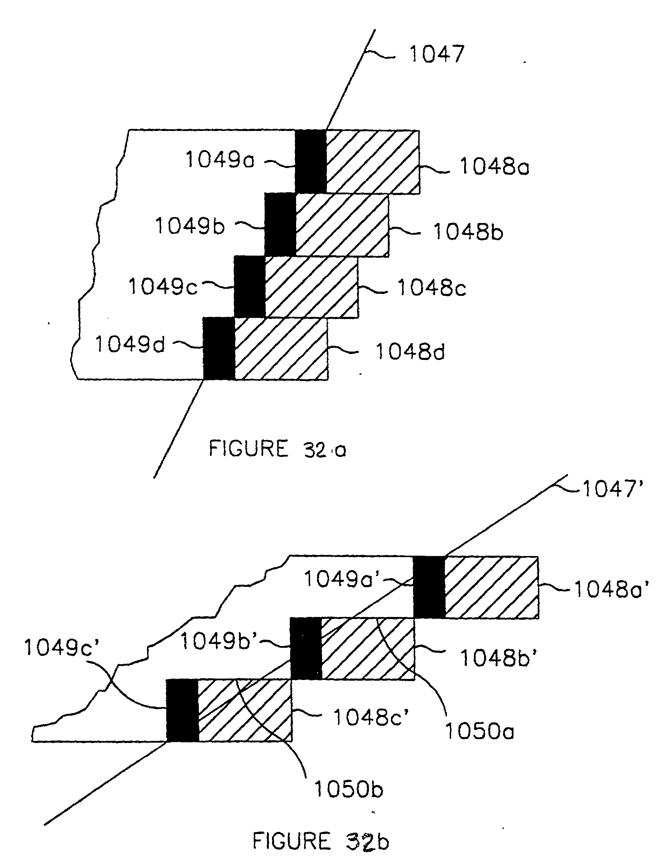

A potential problem with this last approach is that it may not be effective for purposes of inserting vents or drains into extremely steep near-flat surfaces. In Figure 32a, for example, a steep near-flat surface (identified with numeral 1047) is shown. The LB regions associated with the respective layers are identified with numerals 1049a, 1049b, 1049c, and 1049d, and the DB regions associated with the respective layers are identified with numerals 1048a, 1048b, 1048c, and 1048d. The removal of the DB regions, which the above-described variant will accomplish, will leave no gap in the resultant surface of the object. That is because the surface is so steep, that the LB regions from successive layers are close enough to one another to close any gaps.

This approach, however, will be effective with more gradual near-flat surfaces, such as that identified with numeral 1047' in Figure 32b. In this figure, the LB regions for the respective layers are identified with numerals 1049a', 1049b', and 1049c', while the DB regions for the respective layers are identified with numerals 1048a', 1048b', and 1048c'. The removal of the DB regions in this case will leave gaps, identified with numerals 1050a and 1050b, which are not "plugged" by the remaining LB regions. Drains in these regions would be effective for the purpose of draining unsolidified material from the part. Consequently, it may be appropriate to limit application of this variant to gradually-sloping near-flat surfaces.

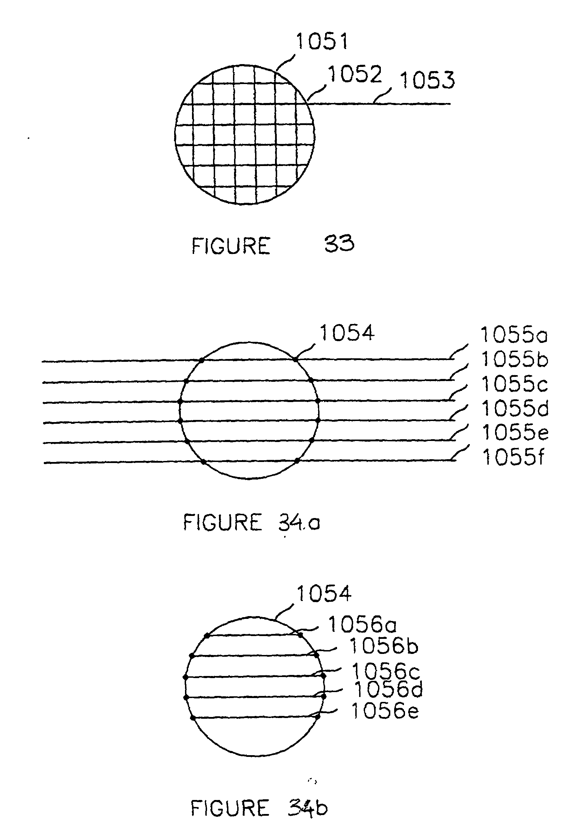

A fourth approach for implementing this second embodiment will now be described. An advantageous aspect of this approach is that it can be used to insert vents/drains in vertical as well as near-flat regions. According to this embodiment, a new boundary type is created known as the "anti-boundary." A requirement imposed by C-SLICE is that layer boundaries (LB) form closed loops. The requirement is imposed because of the function performed by layer boundaries: they are used to generate hatch and fill vectors. As illustrated in Figure 33, if a break 1052 were to appear in the layer boundary 1051 of an object, it would lead to the creation of unwanted hatch or fill (identified with numeral 1053).

This requirement creates a problem for the creation of vents/drains in steep or vertical surfaces. As discussed, for these surfaces, the layer boundaries from successive layers are so close that they inhibit or prevent the creation of vents/drain through openings in skin fill alone. Thus, a means must be provided for the insertion of breaks into layer boundaries.

The addition of temporary boundaries solves this problem. Temporary boundaries define the portion of layer boundaries which are not to be solidified. Temporary boundaries complement regular boundaries so a complete closed loop is formed. These temporary boundaries are retained for use in generating hatch/fill vectors but are not included with the boundaries to be exposed.

An approach for generating temporary boundaries, illustrated in Figures 34a-34b, is from the intersection between the desired vent/drain (as it exists on the near-flat/vertical surface of the object) (identified in the figures with numeral 1054) and the slicing planes (identified in Figure 22a with numerals 1055a, 1055b, 1055c, 1055d, 1055e, and 1055f) used in C-SLICE (layer comparison slice). The result is a series of lines (partial boundaries) at various z-positions, identified in Figure 34b with numerals 1056a, 1056b, 1056c, 1056d, and 1056e, which constitute the temporary boundaries. This approach would be effective for use with both the SLA-250 (in which hatch and fill are produced in C-SLICE at or about the same time as the layer boundary information), and the SLA-500 (in which hatch and fill are created "on the fly" (as described in U.S. Patent No. 5,182,715). Both temporary and regular boundaries would be passed to the SLA-500, both for use in hatch generation, but with only regular boundaries used in exposing.

Alternatively, two boundaries can be formed, wherein one boundary includes a purposely designed break in it and is used for exposing the material. The other boundary forms a complete loop and is used for hatch or fill generation.

As a further alternative, a complete boundary loop can be generated along with one or more "anti-boundary" segments. In this case, the complete boundary loop is used for generating hatch after which a Boolean difference is taken between the boundary loop and the anti-boundary segment to yield an incomplete or broken boundary to be utilized in exposing the material.

Though the above embodiments have been primarily described in terms of their implementation in systems that operate based on the selectively solidification of photopolymers (the preferred system), it is believed that the data processing and object building techniques are applicable to other segments of the Rapid Prototyping and Manufacturing industry alone or in combination. These other segments include technologies involving the selective solidification of polymerizable material by use of IR, visible and other forms of radiation or by the selective deposition of a medium onto the material (e.g. a photoinitiator being dispensed onto a polymerizable material in a continuous or intermittent light environment or selective deposition of the second part of a two-part epoxy onto the first part). Also, technologies involved in the building of objects from selectively solidified powdered materials (e.g. by sintering or selective deposition of a reactive material or binding agent) are included in these segments. Furthermore, technologies utilizing the layer by layer build up of sheet material or the selective dispensing of a material that solidifies when dispensed into an appropriate environment (e.g. the technologies disclosed in U.S. Patent Nos. 5,192,559 and 5,141,680) are included in these segments.

### Conversion of .STL to .CTL Files

An .STL representation of an object may be converted into a new representation known as the .CTL file format (the term "CTL" stands for Compressed Triangle List), and then using the resulting .CTL file in the remaining stereolithographic process steps. The technique involves eliminating redundant vertices, and then expressing triangles which substantially span the surface or surfaces of the object in terms of identifiers of the non-redundant vertices.

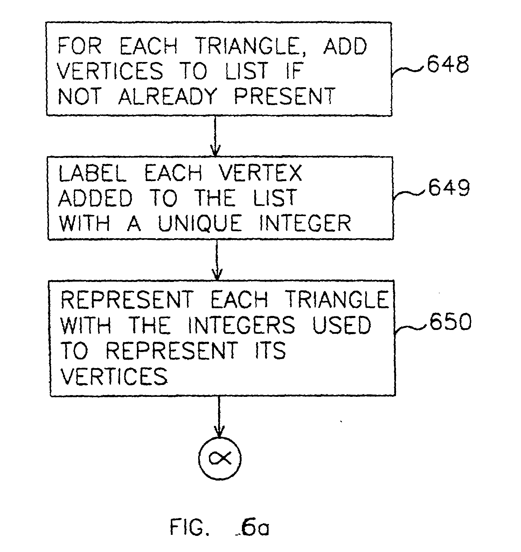

The technique can be explained with reference to Figures 6a-6B, which illustrate a flowchart of the technique. In the first step, identified with numeral 648 in the figure, the vertices of each .STL triangle are first compared to a list, and then added thereto if not already present in the list. As described in the '622 patent, each .STL triangle is preferably represented by nine floating point numbers which define the Cartesian coordinates of the three triangle vertices, as well as three floating point numbers which define the Cartesian coordinates of the triangle normal. The order in which the vertices are listed preferably obeys the "right-hand rule," according to which the backside of the triangle is taken to surface a solid if they are oriented in a counter-clockwise direction, and are taken to surface a hollow region if they are oriented in a clockwise direction.

In determining whether a vertex is already present in the list, the three floating point numbers are each compared with the corresponding numbers making up each vertex in the list, In performing the comparisons, strict identity is not required. Instead, a "delta" value is used to take account of the rounding error associated with floating point numbers. The value represents a zone by which two floating point numbers can differ and still be considered identical.

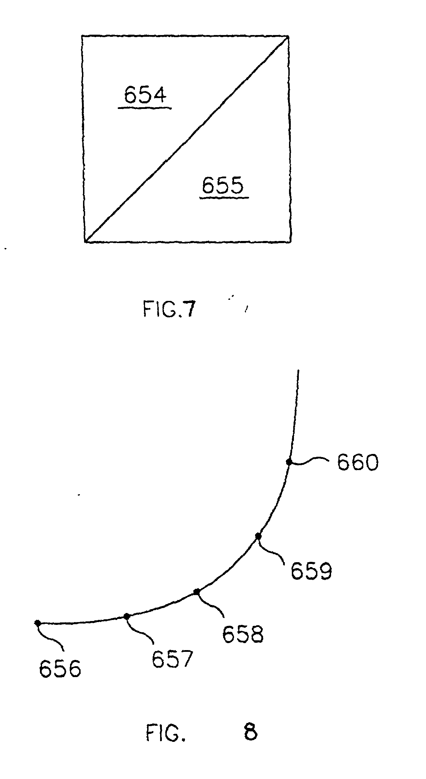

The operation of this step can be explained with reference to Figure 7, which illustrates two triangles, identified with numerals 654 and 655. The first triangle, identified with numeral 654, is assumed to have the following vertices: (0.00001, 0.0, 0.0), (0.0, 1.0, 1.0), and (0.0, 0.0, 1.0). The second triangle, identified with numeral 655, is assumed to have the following vertices: (0.0, 0.0, 0.0001), (1.0, 0.0, 0.0), and (0.0, 1.0, 1.0).

The vertices of triangle 654 are then evaluated for placement on the list Since the list is presently empty, each vertex of triangle 654 is placed on the list. The vertices of triangle 655 are then evaluated for placement on the list. Assuming a delta of .001 is used, this evaluation results in a determination that the first and third vertices (0.0, 0.0, 0.0001) and (0.0, 1.0, 1.0) are already in the list, having been placed there in connection with triangle 654 while the third vertex is new. Thus, the net result of this evaluation process is the placement of the second (1.0, 0.0, 0.0) vertex in the list. Thus, at the completion of this first step, the list of vertices is as follows:- (0.00001, 0.0, 0.0), (0.0, 1.0, 1.0), (0.0, 0.0, 1.0), and (1.0, 0.0, 0.0).

In the second step, identified with numeral 649 in the figure, any vertex added to the list is represented with a unique integer. Advantageously, the integer represents the position or index of the vertex in the list. In relation to the list just discussed, the following assignment might result from this step: V0: (0.00001, 0.0, 0.0), V1: (0.0, 1.0, 1.0), V2: (0.0, 0.0, 1.0), and V3: (1.0, 0.0, 0.0).

In the third step, identified with numeral 650 in the figure, each triangle is represented by the three integers which define the vertices of the triangle. The two triangles illustrated in Figure 7 might be represented as follows: T1 (identified with numeral 654 in Figure 7): (0, 1, 2), and T2 (identified with numeral 655 in Figure 7): (0, 3, 1).

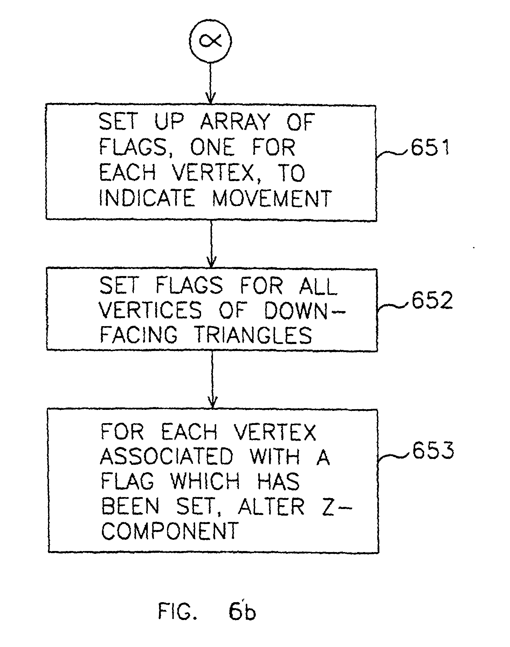

In the fourth step, identified with numeral 651 in Figure 6b, an array of Boolean flags is established, one for each vertex in the list. The purpose of the flags is to keep track of which vertices have been moved. Initially, each flag is cleared.

In the fifth step, identified with numeral 652 in the figure, the flags of all vertices of down-facing triangles are set to a logical "1". The down-facing triangles are identified using the Z-component of the triangle normals. In the case of down-facing triangles, such value is negative and will be equal to -1.

In the sixth step, identified with numeral 653 in the figure, the Z components of the vertices whose flags have been set may be adjusted to correct for Z-error. In the case in which the MSD is 12 mils (0.3 mm) and the desired layer thickness is 4 mils (0.1 mm), for example, the Z-components of the vertices of the down-facing triangles would be adjusted upwards by 8 mils (0.2 mm).

The modified .CTL file which results from this process is then used in lieu of the .STL representation in the remaining steps of the stereolithographic building process. Although that process will have to be modified slightly in order to accommodate the new .CTL format, such modifications are simple to make, and believed to be within the skill of the ordinary practitioner. For example, one could plug actual values in for the identifiers as each vertex is processed. Thus, they will not be further described.

It should be appreciated that an advantage of this embodiment over the second is computational efficiency resulting from a reduction in the number of vertices which must be moved. In the second embodiment, it is necessary to move the vertices of the down-facing triangles as well as all vertices which touch or are within a specified rounding error from one another. In the third embodiment, by contrast, only the vertices of the down-facing triangles need be moved. The vertices of the other triangles are automatically adjusted because of the manner in which they are represented (i.e., through integers which uniquely identify the vertices making up the triangles). In summary, through this representation process, the step of adjusting the Z-components of the vertices of the down-facing triangles automatically adjusts all relevant triangles.

Another advantage relates to a reduction in storage requirements. With the .CTL representation, the floating point numbers making up the vertices need only be stored once. By contrast, with the .STL representation, the redundancy of vertices amongst triangles results in multiple copies of the same vertex being stored.

### Generation of .CTL File Using Hash Table

A modification to the step of determining whether any two vertices from different triangles are the "same" (i.e., within a specified rounding error) is possible. It has been discovered that this step, if performed using a pairwise comparison between a given vertex and the vertices of every other triangle in the .STL file, can be extremely time-consuming. Although the time required can be reduced to some extent by sorting the triangles (e.g., sorting by the minimum Z-component of the triangle vertices before performing the comparison), the time required (typically 2-3 hours) is still too long for most applications.

It has been discovered that appropriate results can be obtained through utilization of a hash table to sort the triangle vertices. The technique involves selection of an appropriate hash function which is effective for the purposes of putting similar vertices, i.e., vertices within a specified rounding error, into the same buckets of the hash table, while simultaneously achieving a wide disparity between dissimilar vertices. In essence, the technique involves sorting the triangle vertices to a hash table, and eliminating redundant vertices by comparing the vertices which fall within the same bucket or slot of the hash table. The non-redundant vertices are then labeled with unique identifying indicia, and the triangles are then expresses in terms of the unique identifying indicia rather than the vertices themselves.

In an exemplary embodiment, it has been discovered that acceptable results can be obtained using the following hash function: modulus(integer(abs((x*31.3 + y*24343.0 + z*68.265))), where the term "modulus" refers to the modulus function (i.e., the modulus of a number is the integer remainder, remaining after dividing the number by the base), the term "abs" refers to the absolute value function, the term "integer" refers to the integerization function, the base of the modulus function is the size of the hash table, and x, y, and z refer to the intergized Cartesian coordinates of the vertex in question. Integerization of the vertices, prior to application of the hash function, is necessary to ensure that two similar vertices, i.e., those within an acceptable rounding error, map into the same bucket. Integerization can be accomplished using the following equation: c(T) = integer((c(U)/delta) * delta), in which c(U) refers to an untruncated coordinate, i.e., the x, y, or z component in floating point form, c(T) refers to the truncated coordinate, and delta refers to the degree of acceptable rounding error, i.e., the extent to which two floating point numbers can differ and still be considered to be the same number. In practice, a default value of 1 mil for the delta value is a good value to use given the poor quality of some .STL translators. However, it should be appreciated that if higher resolution is required, delta values such as 0.1 or 0.01 mils can be used.

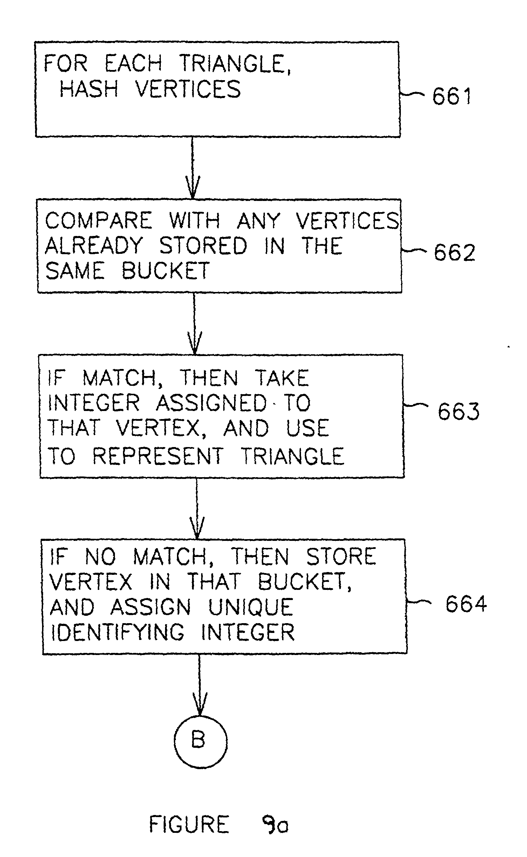

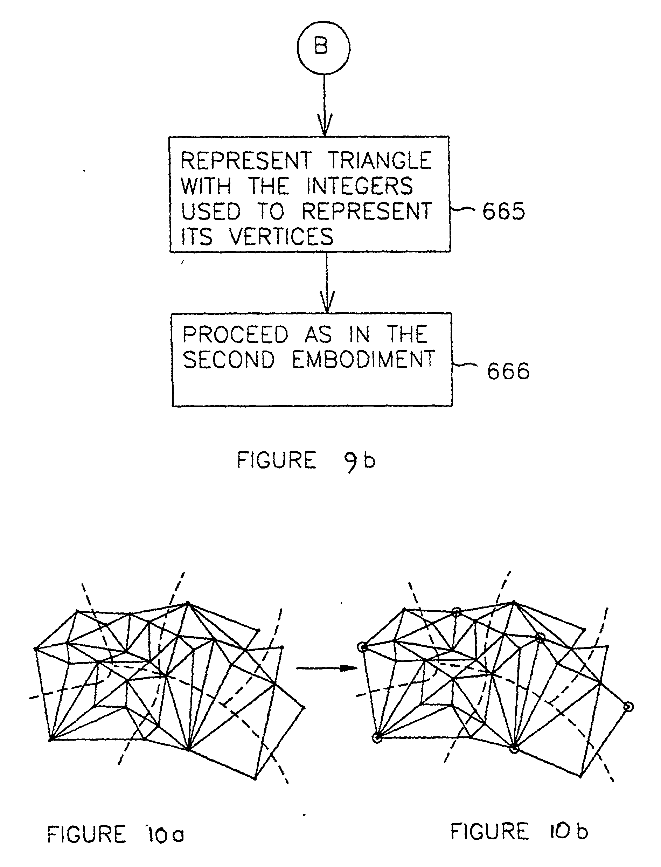

A flow chart of the technique is illustrated in Figures 9a-9b. The first step, identified in the figure with numeral 661, involves, for a given triangle, hashing the triangle vertices into a bucket of the hash table by applying the hash function to the coordinates of each vertex. Next, in the step identified with numeral 662, the vertex is compared with any vertices already stored in the bucket. If there is a "match," i.e., if the coordinates of the two are determined to be within a specified delta value of one another (and thus redundant), then the vertex is not retained in the table. Instead, in the step identified with numeral 663 in the figure, the integer associated with the entry already stored in the table is taken for use in representing the given triangle. However, if there is no match, indicating that the vertex is not redundant, in the step identified with numeral 664, then the vertex is stored in the bucket, and a unique identifying integer is assigned to the vertex. Next, in the step identified with numeral 665, the given triangle is represented by the integer used to represent its vertex. This process is then repeated for the remaining vertices in the object representation. After all the triangles have been represented, as illustrated by the step identified with numeral 666, the technique proceeds as discussed in relation to the second embodiment.

### Other Applications of the .CTL File

Other applications of the .CTL representation of the object will now be discussed. It has been discovered that the .CTL representation is also useful for the purpose of displaying the object on a graphical display device.

A user, for example, may want to display the object, prior to slicing or building it, in order to orient it properly and the like (3D Systems' VIEW program, discussed in U.S. Patent No. 5,182,715, provides a capability for displaying an object prior to building it through stereolithography). For applications such as this, it is typically not necessary to display the object at the finest level of detail. Moreover, inclusion of features such as this into the display of the object can lead to long delays in displaying and moving a part. Therefore, there has been a need for a capability of removing some of the finer details from an object prior to displaying it.

It has been discovered that the .CTL representation of the object provides a useful and efficient way to remove this finer level of detail. The technique involves using a large value for delta, and then invoking the hash table procedure discussed above. Through utilization of a large delta value, many vertices collapse into one and thus disappear. Only vertices which are displaced from any other vertex by more than the value of delta will be retained.

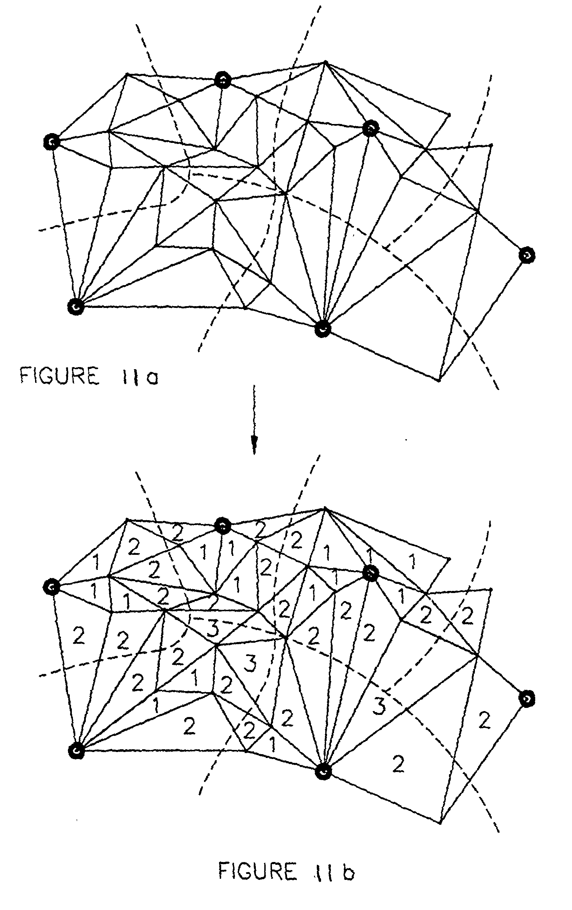

The technique is illustrated in Figures 10a-10b. The dashed lines illustrate the zones delineated by the large delta chosen. All vertices within a given zone will collapse into a single vertex. Figure 10a illustrates the individual vertices prior to their being collapsed. Figure 10b illustrates the number of points (emphasized in the figure) into which some of these individual vertices will collapse.

An aspect of this technique is that many triangles will become degenerate, i.e., only retain one or two distinct vertices. This effect is illustrated in Figures 30a-30b. Figure 30a shows the points into which the vertices will collapse, and Figure 30b shows the number of distinct vertices which will remain with each triangle. As can be seen, only a very few of the triangles illustrated will remain non-degenerate, i.e., retain three distinct vertices.

Since the degenerate triangles will be redundant to vertices or sides of the non-degenerate triangles, i.e., will be unnecessary for the purpose of communicating any information about the object, a procedure is needed to find all these degenerate triangles and remove them. The pseudo-code fragment illustrated in Figure 12 will accomplish this objective. This procedure goes through the list of triangles looking for any degenerative triangles. If one is found, the last triangle is copied into the degenerate triangle's slot in the list, and the number of triangles is decremented.

The expansion of the remaining non-degenerate triangles to cover the resultant space is illustrated in Figures 32a-32b. The set of non-degenerate triangles, prior to expansion, is illustrated in Figure 32a. Note that one vertex from one of these triangles is contained in each one of the zones delineated by the delta value. When these vertexes are respectively collapsed into the single points within the respective zones, the effect is to expand the size of the non-degenerate triangles and fill the space left by the removal of the degenerate triangles. This process is illustrated in Figure 32b.

In practice, the appropriate value of delta for use in this application depends on the surface area of the part involved and the desired number of triangles. The following equation provides a useful method for automatically computing the delta: delta = square root (area/desired number of triangles).

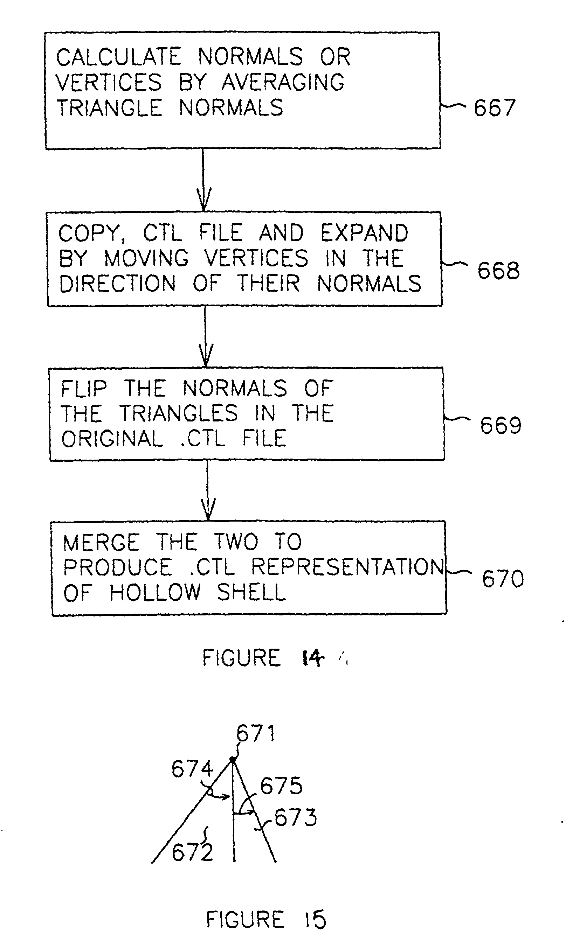

A second additional application of the .CTL representation is the building of a hollow shell of an object. A flowchart of a technique for doing so is illustrated in Figure 14. In the first step, identified in the figure with numeral 667, normals for all vertices are computed. A normal of a vertex is computed by averaging the coordinates of the normals of all triangles the vertex is common to or touches upon. The average can be computed as a simple arithmetic average, but is preferably a weighted average, with the weights being determined by the relative areas of the respective triangles, or more preferably by the relative sizes of the angles making up the respective triangle vertices. The method of weighting by angle size is illustrated in Figure 15. There, a method of calculating the normal for vertex point 671 is shown. Two of the triangles which are used in this calculation process are identified with numerals 672 and 673. The angles formed by the relevant vertices of these two triangles are identified with numerals 674 and 675. Since the angle identified with numeral 674 is greater than that identified with numeral 673, the normal of triangle 672 will be given more weight in the calculation process than the normal associated with the other triangle.

In the second step, identified with numeral 668 in the figure, the .CTL representation of the object is copied, and then expanded by moving the vertices in the directions called for by the respective vertex normals. The expansion is accomplished simply by manipulating the list of vertices. The triangles, which are represented by groupings of integers representing the triangle vertices, need not be altered at all. The degree of expansion depends on the desired thickness of the shell. The level of expansion should be such that the difference between the outer surface of the expanded representation and the original surface is equal to the desired thickness.

In the third step, identified in the figure with numeral 669, the triangles making up the original .CTL representation are effectively "flipped" to create a representation of the inner surface of the shell. This is accomplished by switching the sign of the triangle normals, and also possibly by changing the order of the vertices to reflect the right-hand rule.

Finally, in the fourth step, identified in the figure with numeral 670, the expanded file and the original file are merged to produce a .CTL representation of a hollow shell. This .CTL file is then used to drive the remaining steps of the stereolithographic process, beginning with the slicing process.

As an alternative step 1, a copy of the .CTL file can be made and the vertex normals determined. Then, as an alternative step 2, the vertex normals can be reversed in the copy. Next, as an alternative step 3, the vertices of the copy can be shifted in the direction of the reversed normals to yield a contracted size. Finally, as in original step 4 (670 of Figure 14) the original and shifted .CTL files are merged to produce a hollow shell. This alternative embodiment is considered most preferred since it leaves the outer dimension of the object as in the original file. However, if the inner dimension of the object is considered most relevant the embodiment of Figure 14 would be considered more preferable.

The above embodiment for forming a shell can be used to form a solid object wherein two or more different building styles can be sued at different depths into the object. For example, in the above alternative shell approach, a copy of the shifted representation can be made and the normals can be reversed back to their original directions to form a third representation. This third representation represents an internal region of the object while the combined first and second representations represent an outer shell region (exterior region) of the object. Different build parameters (e.g. bordering, hatching, and filling patterns, solidification amounts) can be applied to each region so as to form an object with an interior surface distinct from its exterior structure. Of course, additional copies, offsetting, and normal reversals can be performed to yield additional zones or regions as one moves deeper into the object. Additionally, the offset or shifting amount can vary from level to level.

A third additional application of the .CTL representation is the building of a scaled-down part which, upon being powder coated or the like (described in U.S. Patent No. 5,234,636), will be at the correct size. A technique for producing a .CTL file for such a part involves computing the vertex normals, as described previously, and then moving the vertices in the direction opposite to that specified by the normals until an object representation having the correct scaled down dimensions is created.

## Claims

1. A method of providing a three--dimensional object to be built layer-by-layer by selective solidification of a solidifiable medium, in which at least one region of the object, which is indicated as being solid in a first data set defining the object, is built according to a second data set derived from the first data set as a structure having spaces containing unsolidified medium between solidified structural elements, said second data set provides that said object is built to have one or more surfaces defining the said region which close off said spaces from communication with the exterior of the object in which at least one of said surfaces is provided with a vent or drain hole (1032,1033,1034) allowing evacuation of unsolidified medium from said spaces.

2. A method as claimed in Claim 1, in which the at least one surface is a flat surface.

3. A method as claimed in Claim 1, in which the at least one surface is a near-flat surface.

4. A method as claimed in any one of the preceding claims, in which the surface is a vertical surface.

5. A method as claimed in any one of the preceding claims, in which said first data set defines the object shape in the form of polygons defined by their vertices, and wherein said vent or drain hole (1032,1033,1034) is obtained by selecting among said surfaces defined by the first data set and by modifying the second set of data to incorporate the vent or drain hole (1032,1033,1034) into the said at least one surface.

6. A method according to any one of Claims 1 to 4, in which said first data set defines the object shape in the form of polygons defined by their vertices, and wherein said vent or drain hole (1032,1033,1034) is obtained by selecting among said polygons defined by the first data set and by modifying the second set of data to incorporate the vent or drain hole (1032,1033,1034) into the at least one selected polygon.

7. A method according to Claim 6, in which the at least one selected polygon is substantially flat.

8. A method as claimed in any one of Claims 1 to 4, in which said first data set defines the object as a plurality of representations of boundaries of cross-sections of the object, and wherein said vent or drain hole (1032,1033,1034) is obtained by modifying at least one of the boundary representations of the second data set to incorporate the vent or drain hole (1032,1033,1034) into said boundary.

9. A method as claimed in any one of the preceding claims, further comprising storing sets of data defining vent and drain holes (1032,1033,1034) respectively, and in which the incorporation of a vent or drain hole (1032,1033,1034) into said at least one surface comprises combining a stored set of data defining a vent or drain hole (1032,1033,1034) with data from said first data set pertaining to said surface in which the vent or drain hole (1032,1033,1034) is to be provided.

10. A method as claimed in Claim 9, in which said combining a stored set of data with data from said first data comprises a Boolean operation.

11. A method as claimed in Claim 10, in which said Boolean operation is an intersection.

12. A method as claimed in Claim 9 to 11, in which the or at least one said surface is built as multiple layers of skinning and the combining is applied to each of the multiple layers of skinning.

13. A method as claimed in any one of the preceding claims, in which a further object representation (1041) having at least one of a vertical surface and a flat surface (1042) is selected, the further object representation (1042) is orientated with respect to the first mentioned object representation such that the flat surface and/or vertical surface (1042) of the further object representation (1041) is situated near a near-flat surface of the first mentioned object representation, performing a Boolean operation between the object representations to form a modified object representation including a flat surface or vertical surface (1043) formed at the near-flat surface of the object representation, and inserting the drain or vent (1032,1033,1034) in the flat or vertical surface (1043) of the modified object representation.

14. A method as claimed in any one of the preceding claims, in which the vent or drain (1032,1033,1034) is specified by a location and a dimension.

15. A method as claimed in Claim 14 in which the dimension of the vent or drain (1032,1033,1034) is selected from one or more preset dimensions.

16. A method as claimed in any one of the preceding claims, in which the dimension of a drain (1033,1034) in a down-facing region is larger than the dimension of a vent (1032) in an up-facing region.

17. A method as claimed in any one of the preceding claims, in which the solidifiable material is a photopolymerizable liquid.

18. A method as claimed in any one of the preceding claims, in which the layers are selectively exposed to synergistic stimulation according to the data.

19. A method as claimed in Claim 18, in which the synergistic stimulation comprises ultraviolet radiation.

20. A method according to any one of the preceding claims in which, after the object is formed, any unsolidified material within the object is at least partially removed from the object through the at least one drain hole (1033,1034).

21. A method of investment casting, in which an object formed according to Claim 20 is used as the pattern.

22. An apparatus for providing a three-dimensional object to be built layer-by-layer by selective solidification of a solidifiable medium, in which at least one region of the object, which is indicated as being solid in a first data set defining the object, is built according to a second data set derived from the first data set as a structure having spaces containing unsolidified medium between solidified structural elements, the apparatus includes a second data set generating means to generate said second data set including one or more surfaces defining the said region which close off said spaces from communication with the exterior of the body, in which a vent or drain forming means to provide at least one of said surfaces is provided with a vent or drain hole (1032,1033,1034) allowing evacuation of unsolidified medium from said spaces.

23. An apparatus as claimed in Claim 22, in which the at least one surface is a flat surface.

24. An apparatus as claimed in Claim 22, in which the at least one surface is a near-flat surface.

25. An apparatus as claimed in any one of the Claims 22 to 24, in which the surface is a vertical surface.

26. An apparatus as claimed in any one of Claims 22 to 25, in which said first data set defines the object shape in the form of polygons defined by their vertices, and wherein said means for forming the vent or drain hole (1032,1033,1034) selects among said surfaces defined by the first data set and modifies the second set of data to incorporate the vent or drain hole (1032,1033,1034) into the said at least one surface.

27. An apparatus as claimed in any one of Claims 22 to 25, in which said first data set defines the object shape in the form of polygons defined by their vertices, and wherein said means for forming the vent or drain hole (1032,1033,1034) selects among said polygons defined by the first set of data and modifies the second set of data to incorporate the vent or drain hole (1032,1033,1034) into the said at least one selected polygon.

28. An apparatus as claimed in Claim 26, in which the said at least one selected polygone is substantially flat.

29. An apparatus as claimed in any one of Claims 22 to 25, in which said first data set defines the object as a plurality of representations of boundaries of cross-sections of the object, and wherein said means for forming the vent or drain hole (1032,1033,1034) modifies at least one of the boundary representation of the second data set to incorporate the vent or drain hole into said boundary.

30. An apparatus as claimed in any one of Claims 22 to 29, further comprising a means for storing sets of data defining vent and drain holes (1032,1033,1034), and the vent or drain forming means comprises a means for combining a stored set of data defining a vent or drain hole (1032,1033,1034) with data from said first data set pertaining to the said surface in which the vent or drain hole (1032,1033,1034) is to be provided.

31. An apparatus as claimed in Claim 30, in which the means for combining the stored set of data with data from said first data comprises a means for carrying out a Boolean operation.

32. An apparatus as claimed in Claim 31, in which the Boolean operation is an intersection.

33. An apparatus as claimed in any one of Claims 30 to 32, in which the or at least one surface is built as multiple layers of skinning and the means for combining is provided to combine the data to each of the multiple layers of skinning.

34. An apparatus as claimed in any one of Claims 22 to 33, in which a means is provided for selecting a further object representation (1041) having at least one of a vertical surface and a flat surface (1042) and orientating the further object representation (1041) with respect to the first mentioned object representation (1041) such that the flat surface (1042) and/or vertical surface of the further object representation (1041) is situated near a near-flat surface of the first mentioned object representation, means for performing a Boolean operation between the object representations to form a modified first object representation including a flat surface or vertical surface (1043) formed at the near-flat surface of the first object representation, and in which the drain or vent (1032,1033,1034) forming means forms the drain or vent (1032,1033,1034) in the flat or vertical surface of the modified object representation.

35. An apparatus as claimed in any one of Claims 22 to 34, in which the apparatus specifies the vent or drain (1032,1033,1034) by a location and a dimension.

36. An apparatus as claimed in Claim 35, further comprising a memory for storing one of more preset dimensions for a vent or drain (1032,1033,1034), and which includes a means for selecting the dimension of the vent or drain (1032,1033,1034) from said one or more preset dimensions.

37. An apparatus as claimed in any one of Claims 22 to 36, in which the vent or drain (1033,1034) forming means forms a drain in a down-facing region with a larger dimension than the dimension of a vent (1032) in an up-facing region.

38. An apparatus as claimed in any one of Claims 22 to 37, in which the solidifiable material is a photopolymerizable liquid.

39. An apparatus as claimed in any one of Claims 22 to 38, further comprising a source of synergistic stimulation, in which the layers are selectively exposed to the synergistic stimulation according to the data.

40. An apparatus as claimed in Claim 39, in which the source of synergistic stimulation comprises a source of ultraviolet radiation.

41. An apparatus as claimed in any one of Claims 22 to 40 for providing a vent or drain (1032,1033,1034) in a three-dimensional object in accordance with the method of any of Claims 1 to 20.

## Patentansprüche

1. Verfahren zum Bereitstellen eines dreidimensionalen Objekts, das schichtweise durch die gezielte Verfestigung eines verfestigbaren Mediums aufgebaut werden soll, bei dem zumindest ein Bereich des Objekts, der in einem ersten Datensatz, der das Objekt definiert, als fest angegeben ist, gemäß einem zweiten Datensatz aufgebaut wird, der als eine Struktur mit Zwischenräumen vom ersten Datensatz abgeleitet ist, die nicht verfestigtes Medium zwischen verfestigten Strukturelementen enthalten, wobei der zweite Datensatz vorsieht, dass das Objekt mit einer oder mehreren Oberflächen aufgebaut wird, die den Bereich definieren, und die die Zwischenräume gegenüber der Außenseite des Objekts abdichten, wobei zumindest eine der Oberflächen eine Entlüftungsöffnung oder eine Sickerbohrung (1032, 1033, 1034) aufweist, die das Entleeren von nicht verfestigtem Medium aus den Zwischenräumen ermöglicht.

2. Verfahren nach Anspruch 1, wobei die zumindest eine Oberfläche eine flache Oberfläche ist.

3. Verfahren nach Anspruch 1, wobei die zumindest eine Oberfläche eine nahezu flache Oberfläche ist.

4. Verfahren nach einem der vorangegangenen Ansprüche, in der die Oberfläche eine vertikale Oberfläche ist.

5. Verfahren nach einem der vorangegangenen Ansprüche, in der der erste Datensatz die Form des Objekts in der Form von Polygonen definiert, die durch ihre Ecken definiert werden und wobei die Entlüftungsöffnung oder Sickerbohrung (1032, 1033, 1034) durch die Auswahl unter den Oberflächen, die vom ersten Datensatz definiert werden, und durch das Modifizieren des zweiten Datensatzes erhalten wird, um die Entlüftungsöffnung oder die Sickerbohrung (1032, 1033, 1034) in die zumindest eine Oberfläche mit aufzunehmen.

6. Verfahren nach einem der Ansprüche 1-4, wobei der erste Datensatz die Form des Objekts in der Form von Polygonen definiert, die durch ihre Ecken definiert werden, und wobei die Entlüftungsöffnung oder Sickerbohrung (1032, 1033, 1034) durch die Auswahl unter den Polygonen, die durch den ersten Datensatz definiert werden und durch das Modifizieren des zweiten Datensatzes erhalten wird, um die Entlüftungsöffnung oder Sickerbohrung 1032, 1033, 1034) in zumindest ein ausgewähltes Polygon mit aufzunehmen.

7. Verfahren nach Anspruch 6, wobei das zumindest eine ausgewählte Polygon im wesentlichen flach ist.

8. Verfahren nach einem der Ansprüche 1 - 4, wobei der erste Datensatz das Objekt als eine Mehrzahl von Darstellungen der Grenzen von Querschnitten des Objekts definiert, wobei die Entlüftungsöffnung oder Sickerbohrung (1032, 1033, 1034) durch das Modifizieren von zumindest einer Grenzendarstellung des zweiten Datensatzes erhalten wird, um die Entlüftungsöffnung oder Sickerbohrung (1032, 1033, 1034) in die Grenze mit aufzunehmen.

9. Verfahren nach einem der vorangegangenen Ansprüche, ferner aufweisend: Speichern von Datensätzen, die die Entlüftungsöffnungen bzw. Sickerbohrungen (1032, 1033, 1034) definieren und bei denen die Aufnahme einer Entlüftungsöffnung oder einer Sickerbohrung (1032, 1033, 1034) in die zumindest eine Oberfläche das Kombinieren eines gespeicherten Datensatzes, der ein Entlüftungsloch oder eine Sickerbohrung definiert (1032, 1033, 1034), mit Daten vom ersten Datensatz, die sich auf die Oberfläche beziehen, in der die Entlüftungsöffnung oder Sickerbohrung (1032, 1033, 1034) bereitgestellt werden soll, umfasst.

10. Verfahren nach Anspruch 9, wobei das Kombinieren eines gespeicherten Datensatzes mit Daten aus den ersten Daten eine Boolesche Verknüpfung umfasst.

11. Verfahren nach Anspruch 10, wobei die Boolesche Verknüpfung eine Boolesche Multiplikation ist.

12. Verfahren nach Anspruch 9 - 11 bei dem die oder zumindest eine Oberfläche aus mehreren Schichten von mehreren Lagen einer Außenschicht aufgebaut wird und wobei das Kombinieren auf jede der mehreren Lagen der Außenschicht angewendet wird.

13. Verfahren nach einem der vorangegangenen Ansprüche, bei dem eine weitere Objektdarstellung (1041) mit zumindest einer vertikalen Oberfläche und einer flachen Oberfläche (1042) ausgewählt wird, wobei die weitere Objektdarstellung (1042) so in Bezug auf die erste genannte Objektdarstellung orientiert ist, dass die flache Oberfläche und/oder die vertikale Oberfläche (1042) der weiteren Objektdarstellung nahe einer nahezu flachen Oberfläche der ersten genannten Objektdarstellung angeordnet ist, eine Boolesche Verknüpfung zwischen den Objektdarstellungen durchgeführt wird, um eine modifizierte Objektdarstellung mit einer flachen Oberfläche oder einer vertikalen Oberfläche (1043) zu bilden, die an der nahezu flachen Oberfläche der Objektdarstellung gebildet wird, und bei dem die Sickerbohrung oder Entlüftungsöffnung (1032, 1033, 1034) in die flache oder vertikale Oberfläche (1043) der modifizierten Objektdarstellung eingefügt wird.

14. Verfahren nach einem der vorangegangenen Ansprüche, in der die Entlüftungsöffnung oder Sickerbohrung (1032, 1033, 1034) durch einen Ort und eine Dimension spezifiziert wird.

15. Verfahren nach Anspruch 14, in der die Dimension der Entlüftungsöffnung oder Sickerbohrung (1032, 1033, 1034) aus einer oder mehreren voreingestellten Dimensionen ausgewählt wird.

16. Verfahren nach einem der vorangegangenen Ansprüche, in der die Dimension eine Sickerbohrung (1033, 1034) mit einem nach unten gerichteten Bereich größer ist als die Dimension einer Entlüftungsöffnung (1032) in einem nach oben gerichteten Bereich.

17. Verfahren nach einem der vorangegangenen Ansprüche, bei dem das verfestigbare Material eine fotopolymerisierbare Flüssigkeit ist.

18. Verfahren nach einem der vorangegangenen Ansprüche, bei dem die Schichten selektiv einer synergistischen Stimulation gemäß der Daten ausgesetzt werden.

19. Verfahren nach Anspruch 18, in der die synergistische Stimulation ultraviolette Strahlung umfasst.

20. Verfahren nach einem der vorangegangenen Ansprüche, in der jegliches nicht verfestigtes Material innerhalb des Objektes zumindest teilweise, nachdem das Objekt gebildet worden ist, von dem Objekt entfernt wird, durch die zumindest eine Sickerbohrung (1033, 1034).

21. Verfahren zum Genauguss, bei dem ein Objekt, das nach Anspruch 20 gebildet worden ist, als Gussmodell verwendet wird.

22. Vorrichtung zum Bereitstellen eines dreidimensionalen Objektes, das schichtweise durch die gezielte Verfestigung eines verfestigbaren Mediums aufgebaut werden soll, in der zumindest ein Bereich des Objekts, der in einem ersten Datensatz, der das Objekt definiert, als fest angegeben ist, gemäß einem zweiten Datensatz, der vom ersten Datensatz abgeleitet worden ist, als eine Struktur mit Zwischenräumen aufgebaut wird, die nicht verfestigtes Medium zwischen verfestigten Strukturelementen enthalten, wobei die Vorrichtung ein Erzeugungsmittel für den zweiten Datensatz umfasst, um den zweiten Datensatz mit einer oder mehrere Oberflächen zu erzeugen, die den Bereich definieren und die die Zwischenräume gegenüber der Außenseite des Körpers abdichten, wobei ein eine Entlüftungsöffnung oder eine Sickerbohrung bildendes Mittel bereitgestellt wird, um zumindest auf einer der Oberflächen eine Entlüftungsöffnung oder eine Sickerbohrung (1032, 1033, 1034) bereitzustellen, die die Entleerung von nicht verfestigtem Medium aus den Zwischenräumen ermöglicht.

23. Vorrichtung nach Anspruch 22, wobei die zumindest eine Oberfläche eine flache Oberfläche ist.

24. Vorrichtung nach Anspruch 22, wobei die zumindest eine Oberfläche eine nahezu flache Oberfläche ist.

25. Vorrichtung nach einem der Ansprüche 22 - 24, in der die Oberfläche eine vertikale Oberfläche ist.

26. Vorrichtung nach einem der Ansprüche 22 - 25, in der der erste Datensatz die Form des Objektes in der Form von Polygonen definiert, die durch ihre Ecken definiert werden und wobei das Mittel zum Bilden der Entlüftungsöffnung oder der Sickerbohrung ( 1032, 1033, 1034) unter den Oberflächen, die durch den ersten Datensatz definiert werden, auswählt und den zweiten Datensatz modifiziert, um die Entlüftungsöffnung oder die Sickerbohrung (1032, 1033, 1034) in der zumindest einen Oberfläche aufzunehmen.

27. Vorrichtung nach einem der Ansprüche 22- 25, in der der erste Datensatz die Form des Objektes in der Form von Polygonen definiert, die durch ihre Ecken definiert werden, und wobei das Mittel zum Bilden der Entlüftungsöffnung oder Sickerbohrung (1032, 1033, 1034) unter den durch den ersten Datensatz definierten Polygonen auswählt und den zweiten Datensatz modifiziert, um die Entlüftungsöffnung oder Sickerbohrung (1032, 1033, 1034) in dem zumindest einen ausgewählten Polygon aufzunehmen.

28. Vorrichtung nach Anspruch 26, in der das zumindest eine ausgewählte Polygon im wesentlichen flach ist.

29. Vorrichtung nach einem der Ansprüche 22- 25, in der der erste Datensatz das Objekt als eine Mehrzahl von Darstellungen von Grenzen der Querschnitte des Objekts definiert und wobei das Mittel zum Bilden der Entlüftungsöffnung oder Sickerbohrung (1032, 1033, 1034) zumindest eine der Grenzendarstellungen des zweiten Datensatzes modifiziert, um die Entlüftungsöffnung oder die Sickerbohrung in die Grenze aufzunehmen.

30. Vorrichtung nach einem der Ansprüche 22- 29 ferner aufweisend ein Mittel zum Speichern von Datensätzen, die Entlüftungsöffnungen und Sickerbohrungen definieren (1032, 1033, 1034) und wobei das Mittel zum Bilden von Entlüftungsöffnungen oder Sickerbohrungen ein Mittel zum Kombinieren eines gespeicherten Datensatzes umfasst, der eine Entlüftungsöffnung oder eine Sickerbohrung (1032, 1033, 1034) definiert, mit Daten aus dem ersten Datensatz, die sich auf die Oberfläche beziehen, in der die Entlüftungsöffnung oder Sickerbohrung (1032, 1033, 1034) bereitgestellt werden soll.

31. Vorrichtung nach Anspruch 30, in der das Mittel zum Kombinieren des gespeicherten Datensatzes mit den Daten aus den ersten Daten ein Mittel zum Durchführen einer Booleschen Verknüpfung umfasst.

32. Vorrichtung nach Anspruch 31, in der die Boolesche Verknüpfung eine Boolesche Multiplikation ist.

33. Vorrichtung nach einem der Ansprüche 30 - 32, in der zumindest eine Oberfläche aus mehreren Lagen von Außenschichten aufgebaut wird und wobei das Mittel zum Kombinieren vorgesehen ist, um die Daten von jeder der mehreren Lagen der Außenschicht zu kombinieren.

34. Vorrichtung nach einem der Ansprüche 22 - 33, in der ein Mittel bereitgestellt wird, um eine weitere Objektdarstellung (1041) auszuwählen, die zumindest eine vertikale Oberfläche und eine flache Oberfläche (1042) hat und zum Orientieren der weiteren Objektdarstellung (1041) in Bezug auf die erste genannte Objektdarstellung (1041), so dass die flache Oberfläche (1042) und/oder die vertikale Oberfläche der weiteren Objektdarstellung (1041) nahe einer nahezu flachen Oberfläche der ersten genannten Objektdarstellung angeordnet ist,
ein Mittel zum Durchführen einer Booleschen Verknüpfung zwischen den Objektdarstellungen, um eine modifizierte ersten Darstellung des Objekts zu bilden, die eine flache Oberfläche oder eine vertikale Oberfläche (1043) umfasst, die an der nahezu flachen Oberfläche der ersten Objektdarstellung gebildet wird und in der das Mittel zum Bilden der Sickerbohrung oder Entlüftungsöffnung (1032, 1033, 1034) die Sickerbohrung oder Entlüftungsöffnung (1032, 1033, 1034) in der flachen oder vertikalen Oberfläche der modifizierten Objektdarstellung bildet.

35. Vorrichtung nach einem der Ansprüche 22- 34, in der die Vorrichtung die Entlüftungsöffnungen oder Sickerbohrung (1032, 1033, 1034) durch einen Ort und eine Dimension spezifiziert.

36. Vorrichtung nach Anspruch 35, ferner aufweisend: einen Speicher zum Speichern von einer von mehreren voreingestellter Dimensionen für eine Entlüftungsöffnung oder eine Sickerbohrung (1032, 1033, 1034) und die ein Mittel umfasst, zur Auswahl der Dimension der Entlüftungsöffnung oder Sickerbohrung (1032, 1033, 1043) aus der einen oder der mehreren voreingestellten Dimensionen.

37. Vorrichtung nach einem der Ansprüche 22 - 36, in der das Mittel zum Bilden der Entlüftungsöffnung oder Sickerbohrung (1033, 1034) eine Sickerbohrung in einem nach unten gerichteten Bereich mit einer größeren Dimension bildet, als die Dimension einer Entlüftungsöffnung (1032) in einem nach oben gerichteten Bereich.

38. Vorrichtung nach einem der Ansprüche 22 - 37, bei der das verfestigbare Material eine fotopolymerisierbare Flüssigkeit ist.

39. Vorrichtung nach einem der Ansprüche 22 - 38, ferner aufweisend eine Quelle zur synergistischen Stimulation, in der die Schichten selektiv der synergistischen Stimulation gemäß der Daten ausgesetzt werden.

40. Vorrichtung nach Anspruch 39, in der die Quelle der synergistischen Stimulation eine Quelle von ultravioletter Strahlung umfasst.

41. Vorrichtung nach einem der Ansprüche 22 - 40, zum Bereitstellen einer Entlüftungsöffnung oder einer Sickerbohrung (1032, 1033, 1034) in einem dreidimensionalen Objekt nach dem Verfahren einer der Ansprüche 1-20.

## Revendications

1. Procédé pour réaliser un objet tridimensionnel à construire couche par couche par solidification sélective d'un milieu solidifiable, dans lequel au moins une région de l'objet, qui est indiquée comme étant solide dans un premier ensemble de données définissant l'objet, est construite conformément à un second ensemble de données dérivé du premier ensemble de données sous forme d'une structure ayant des espaces contenant un milieu non-solidifié entre des éléments structurels solidifiés, ledit second ensemble de données permet que ledit objet soit construit en ayant une ou plusieurs surfaces définissant ladite région qui enferme lesdits espaces vis-à-vis d'une communication avec l'extérieur de l'objet dans lequel au moins une desdites surfaces est munie d'un trou d'évent ou de drain (1032, 1033, 1034) permettant l'évacuation d'un milieu non-solidifié depuis lesdits espaces.

2. Procédé selon la revendication 1, dans lequel ladite au moins une surface est une surface plate.

3. Procédé selon la revendication 1, dans lequel la au moins une surface est une surface presque plate.

4. Procédé selon l'une quelconque des revendications précédentes, dans lequel la surface est une surface verticale.

5. Procédé selon l'une quelconque des revendications précédentes, dans lequel le premier ensemble de données définit la forme d'objet sous la forme de polygones définis par leur sommets, et dans lequel ledit trou d'évent ou de drain (1032, 1033, 1034) est obtenu par une sélection parmi lesdites surfaces définies par le premier ensemble de données et en modifiant le second ensemble de données pour incorporer le trou d'évent ou de drain (1032, 1033, 1034) dans ladite au moins une surface.

6. Procédé selon l'une quelconque des revendications 1 à 4, dans lequel ledit premier ensemble de données définit la forme d'objet sous la forme de polygones définis par leurs sommets, et dans lequel ledit trou d'évent ou de drain (1032, 1033, 1034) est obtenu par une sélection parmi lesdits polygones définis par le premier ensemble de données et en modifiant le second ensemble de données pour incorporer le trou d'évent ou de drain (1032, 1033, 1034) dans le au moins un polygone sélectionné.

7. Procédé selon la revendication 6, dans lequel le au moins un polygone sélectionné est pratiquement plat.

8. Procédé selon l'une quelconque des revendications 1 à 4, dans lequel ledit premier ensemble de données définit l'objet sous forme d'une pluralité de représentations de frontières de coupes transversales de l'objet, et dans lequel ledit trou d'évent ou de drain (1032, 1033, 1034) est obtenu en modifiant au moins une des représentations de frontières du second ensemble de données pour incorporer le trou d'évent ou de drain (1032, 1033, 1034) dans ladite frontière.

9. Procédé selon l'une quelconque des revendications précédentes, comportant de plus la mémorisation d'ensembles de données définissant des trous d'évent ou de drain (1032, 1033, 1034), respectivement, et dans lequel l'incorporation d'un trou d'évent ou de drain (1032, 1033, 1034) dans ladite au moins une surface comporte la combinaison d'un ensemble mémorisé de données définissant un trou d'évent ou de drain (1032, 1033, 1034) avec des données provenant dudit premier ensemble de données concernant ladite surface dans laquelle le trou d'évent ou de drain (1032, 1033, 1034) est à agencer.

10. Procédé selon la revendication 9, dans lequel ladite combinaison d'un ensemble mémorisé de données avec des données provenant dudit premier ensemble de données comporte une opération booléenne.

11. Procédé selon la revendication 10, dans lequel ladite opération booléenne est une intersection.

12. Procédé selon les revendications 9 à 11, dans lequel la surface ou au moins une surface est construite sous forme de multiples couches de décroûtage et la combinaison est appliquée à chacune des multiples couches de décroûtage.

13. Procédé selon l'une quelconque des revendications précédentes, dans lequel une représentation d'objet supplémentaire (1041) ayant au moins une surface verticale et une surface plate (1042) est sélectionnée, la représentation d'objet supplémentaire (1042) est orientée par rapport à la première représentation d'objet mentionnée de sorte que la surface plate et/ou la surface verticale (1042) de la représentation d'objet supplémentaire (1041) est située à proximité d'une surface presque plate de la première représentation d'objet mentionnée, en effectuant une opération booléenne entre les représentations d'objet pour former une représentation d'objet modifiée incluant une surface plate ou une surface verticale (1043) formée au niveau de la surface presque plate de la représentation d'objet, et en insérant le trou d'évent ou de drain (1032, 1033, 1034) dans la surface plate ou verticale (1043) de la représentation d'objet modifiée.

14. Procédé selon l'une quelconque des revendications précédentes, dans lequel l'évent ou le drain (1032, 1033, 1034) est spécifié par un emplacement et une dimension.

15. Procédé selon la revendication 14, dans lequel la dimension de l'évent ou du drain (1032, 1033, 1034) est sélectionnée parmi une ou plusieurs dimensions préétablies.

16. Procédé selon l'une quelconque des revendications précédentes, dans lequel la dimension d'un drain (1033, 1034) dans une région faisant face vers le bas est plus grande que la dimension d'un évent (1032) dans une région faisant face vers le haut.

17. Procédé selon l'une quelconque des revendications précédentes, dans lequel le matériau solidifiable est un liquide photopolymérisable.

18. Procédé selon l'une quelconque des revendications précédentes, dans lequel les couches sont exposées de manière sélective à une stimulation synergique conformément aux données.

19. Procédé selon la revendication 18, dans lequel la stimulation synergique comporte un rayonnement ultraviolet.

20. Procédé selon l'une quelconque des revendications précédentes, dans lequel, après avoir formé l'objet, tout matériau non-solidifié dans l'objet est au moins partiellement éliminé de l'objet à travers le au moins un trou de drain (1033, 1034).

21. Procédé de moulage à ligne perdue, dans lequel un objet formé selon la revendication 20 est utilisé en tant que modèle.

22. Dispositif pour réaliser un objet tridimensionnel à construire couche par couche par solidification sélective d'un milieu solidifiable, dans lequel au moins une région de l'objet, qui est indiquée comme étant solide dans un premier ensemble de données définissant l'objet, est construite conformément à un second ensemble de données dérivé du premier ensemble de données sous forme d'une structure ayant des espaces contenant un milieu non-solidifié entre des éléments structurels solidifiés, le dispositif comporte des moyens de génération de second ensemble de données pour générer ledit second ensemble de données incluant une ou plusieurs surfaces définissant ladite région qui enferme lesdits espaces vis-à-vis d'une communication avec l'extérieur du corps, dans lequel des moyens de formation d'évent ou de drain pour fournir au moins à une desdites surfaces un trou d'évent ou de drain (1032, 1033, 1034) permettant l'évacuation d'un milieu non-solidifié depuis lesdits espaces.

23. Dispositif selon la revendication 22, dans lequel la au moins une surface est une surface plate.

24. Dispositif selon la revendication 22, dans lequel la au moins une surface est une surface presque plate.

25. Dispositif selon l'une quelconque des revendications 22 à 24, dans lequel la surface est une surface verticale.

26. Dispositif selon l'une quelconque des revendications 22 à 25, dans lequel ledit premier ensemble de données définit la forme d'objet sous la forme de polygones définis par leur sommets, et dans lequel lesdits moyens pour former le trou d'évent ou de drain (1032, 1033, 1034) effectuent une sélection parmi lesdites surfaces définies par le premier ensemble de données et modifient le second ensemble de données pour incorporer le trou d'évent ou de drain (1032, 1033, 1034) dans ladite au moins une surface.

27. Dispositif selon l'une quelconque des revendications 22 à 25, dans lequel ledit premier ensemble de données définit la forme d'objet sous la forme de polygones définis par leurs sommets, et dans lequel lesdits moyens pour former le trou d'évent ou de drain (1032, 1033, 1034) effectuent une sélection parmi lesdits polygones définis par le premier ensemble de données et modifient le second ensemble de données pour incorporer le trou d'évent ou de drain (1032, 1033, 1034) dans ledit au moins un polygone sélectionné.

28. Dispositif selon la revendication 26, dans lequel ledit au moins un polygone sélectionné est pratiquement plat.

29. Dispositif selon l'une quelconque des revendications 22 à 25, dans lequel ledit premier ensemble de données définit l'objet sous forme d'une pluralité de représentations de frontières de coupes transversales de l'objet, et dans lequel lesdits moyens pour former le trou d'évent ou de drain (1032, 1033, 1034) modifient au moins une des représentations de frontières du second ensemble de données pour incorporer le trou d'évent ou de drain dans ladite frontière.

30. Dispositif selon l'une quelconque des revendications 22 à 29, comportant de plus des moyens pour mémoriser des ensembles de données définissant des trous d'évent et de drain (1032, 1033, 1034), et les moyens de formation d'évent ou de drain comportent des moyens pour combiner un ensemble mémorisé de données définissant un trou d'évent ou de drain (1032, 1033, 1034) avec des données provenant dudit premier ensemble de données concernant ladite surface dans laquelle le trou d'évent ou de drain (1032, 1033, 1034) est à agencer.

31. Dispositif selon la revendication 30, dans lequel les moyens pour combiner l'ensemble mémorisé de données avec des données provenant dudit premier ensemble de données comportent des moyens pour effectuer une opération booléenne.

32. Dispositif selon la revendication 31, dans lequel l'opération booléenne est une intersection.

33. Dispositif selon l'une quelconque des revendications 30 à 32, dans lequel la surface ou au moins une surface est construite sous forme de multiples couches de décroûtage et les moyens de combinaison sont prévus pour combiner les données dans chacune des multiples couches de décroûtage.

34. Dispositif selon l'une quelconque des revendications 22 à 33, dans lequel des moyens sont prévus pour sélectionner une représentation d'objet supplémentaire (1041) ayant au moins une surface verticale et une surface plate (1042) et pour orienter la représentation d'objet supplémentaire (1042) par rapport à la première représentation d'objet mentionnée (1041) de sorte que la surface plate (1042) et/ou la surface verticale de la représentation d'objet supplémentaire (1041) est située à proximité d'une surface presque plate de la première représentation d'objet mentionnée, des moyens pour effectuer une opération booléenne entre les représentations d'objet pour former une première représentation d'objet modifiée incluant une surface plate ou une surface verticale (1043) formée au niveau de la surface presque plate de la première représentation d'objet, et dans lequel les moyens de formation de drain ou d'évent (1032, 1033, 1034) forment le drain ou l'évent (1032, 1033, 1034) dans la surface plate ou verticale de la représentation d'objet modifiée.

35. Dispositif selon l'une quelconque des revendications 22 à 34, dans lequel le dispositif spécifie l'évent ou le drain (1032, 1033, 1034) par un emplacement et une dimension.

36. Dispositif selon la revendication 35, comportant de plus une mémoire pour mémoriser une ou plusieurs dimensions préétablies pour un évent ou un drain (1032, 1033, 1034), et qui comporte des moyens pour sélectionner la dimension de l'évent ou du drain (1032, 1033, 1034) à partir de ladite dimension ou desdites plusieurs dimensions prédéterminées.

37. Dispositif selon l'une quelconque des revendications 22 à 36, dans lequel les moyens de formation d'évent ou de drain (1033, 1034) forment un drain dans une région faisant face vers le bas avec une dimension plus grande que la dimension d'un évent (1032) dans une région faisant face vers le haut.

38. Dispositif selon l'une quelconque des revendications 22 à 37, dans lequel le matériau solidifiable est un liquide photopolymérisable.

39. Dispositif selon l'une quelconque des revendications 22 à 38, comportant de plus une source de stimulation synergique, dans lequel les couches sont exposées de manière sélective à une stimulation synergique conformément aux données.

40. Dispositif selon la revendication 39, dans lequel la source de stimulation synergique comporte une source de rayonnement ultraviolet.

41. Dispositif selon l'une quelconque des revendications 22 à 40, pour réaliser un évent ou un drain (1032, 1033, 1034) dans un objet tridimensionnel conformément au procédé selon l'une quelconque des revendications 1 à 20.
